# EUROPEAN PATENT APPLICATION

(11) **EP 2 928 064 A1**
(43) Date of publication of application: **07.10.2015**
(21) Application number: 13858953.6
(22) Date of filing: 26.11.2013
(51) Int. Cl.: H02N 2/00, H01L 41/09

(54) **ELASTIC BODY FOR ACTUATOR, AND PIEZOELECTRIC ACTUATOR**

(30) Priority: 29.11.2012 JP 2012260657; 08.01.2013 JP 2013001111; 05.07.2013 JP 2013141942; 05.07.2013 JP 2013141943
(71) Applicant: Daicel Corporation, Osaka 530-0001 (JP)
(72) Inventor: SHIMIZU, Kiyoshi, Tokyo 108-8230 (JP); KAMBARA, Shigeki, Myoko-shi Niigata 944-8550 (JP); KANEDA, Hiroshi, Himeji-shi Hyogo 671-1283 (JP); ITO, Masaaki, Himeji-shi Hyogo 671-1283 (JP); KUME, Atsushi, Himeji-shi Hyogo 671-1283 (JP); OKUYAMA, Naoto, Himeji-shi Hyogo 671-1283 (JP)
(74) Representative: Grünecker Patent- und Rechtsanwälte PartG mbB
(86) International application number: PCT/JP2013/081697
(87) International publication number: WO 2014/084184

(57) **Abstract**

An elastic member 43 comprises a crystalline resin. The elastic member is fixed to a piezoelectric element 42 that generates vibration in response to application of an AC voltage, is in contact with a movable body 45 in use, and flexurally vibrates in response to the vibration of the piezoelectric element 42 to drive the movable body 45. The elastic member 43 may have a tooth 43b on an opposite side with respect to a side fixed to the piezoelectric element 42. The crystalline resin may be a poly(aryl ketone) resin or a poly(phenylene sulfide) resin. The piezoelectric actuator has an excellent transmission of flexural vibration. In a case where a displacement expansion element of a displacement-expanding piezoelectric actuator is formed from a crystalline resin, the actuator greatly amplifies an expansion and contraction displacement of a piezoelectric element. In a case where a resonance member of a Langevin transducer is formed from a crystalline resin, the transducer allows the vibration of the surface at a high speed even in application of a low electric current (or a low voltage).

## Description

### TECHNICAL FIELD

The present invention relates to elastic bodies for actuators which makes use of the ultrasonic vibration induced in electromechanical transducers (such as piezoelectric elements). The present invention also relates to piezoelectric actuators comprising the elastic bodies.

### BACKGROUND ART

Ultrasonic motors are known as a piezoelectric actuator having a piezoelectric element. An ultrasonic motor is provided with a piezoelectric element (this is an electromechanical transducer) as an ultrasonic transducer (or vibrator). The ultrasonic motor is used in various applications (e.g., an optical apparatus or device, such as a camera or a digital versatile disc (DVD)) because of the following advantages over an electromagnetic motor: simple structure without any wiring, low speed high torque, excellent response and control, and very small and precise driving. The ultrasonic motor includes a linear type and a rotor (rotary) type. The ultrasonic motor converts the ultrasonic vibration from a vibrator into a linear motion or a rotary (or rotational) motion.

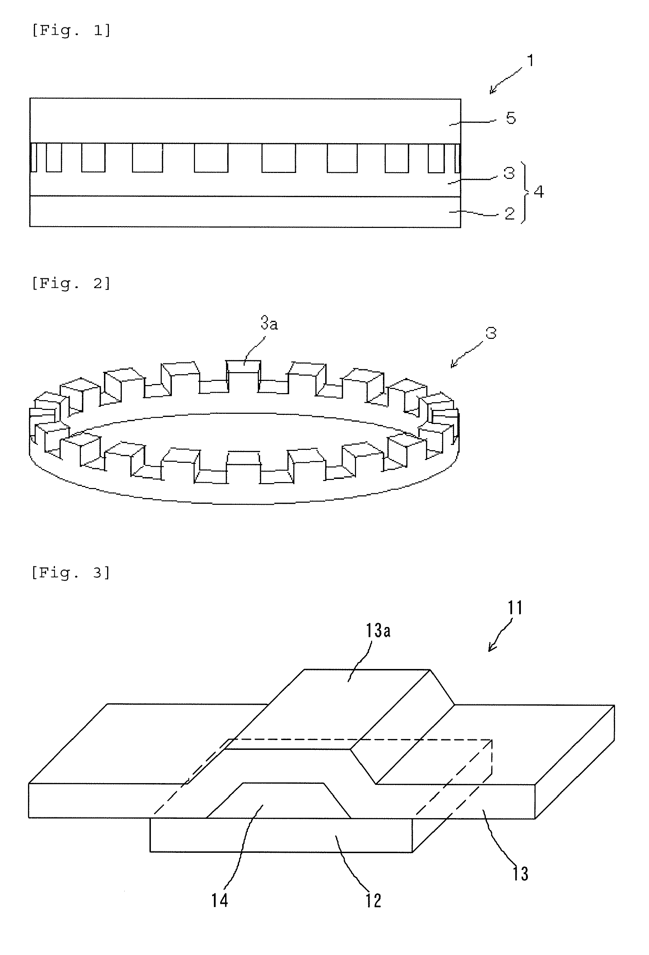

Fig. 1 is a schematic side elevational view of a rotaryultrasonicmotor. Fig. 2 is a schematic perspective view of an elastic member (or an elastic body) of the rotary ultrasonic motor shown in Fig. 1. An ultrasonic motor 1 comprises a stator 4 and a disc (or ring) rotor (or a movable body) 5; the stator 4 comprises a disc (or ring) piezoelectric element 2 and a ring elastic member (a comblike elastic member) 3 fixed (or attached) on the piezoelectric element 2; the elastic member 3 has the same outer diameter as that of the piezoelectric element 2 and has a comb-tooth raised portion (a comb-tooth portion) 3a regularly arranged along a periphery thereof; the disc rotor 5 is disposed so as to press-contact with the elastic member 3 and has the same outer diameter as that of the elastic member. In the ultrasonic motor 1, the stator 4 composed of the piezoelectric element 2 and the comblike elastic member 3 is a fixed member, while the rotor 5 is rotatably disposed. The ultrasonic vibration generated in the piezoelectric element 2 is converted into a rotary motion of the rotor 5 through the comblike elastic member 3. Specifically, the piezoelectric element 2 comprises (or is formed from) a piezoelectric ceramics producing a strain (or a distortion) in application of a voltage; when an AC voltage (frequency voltage) is applied to the piezoelectric element 2, the element 2 regularly repeats a strain and a recovery (an expansion and contraction motion) to produce ultrasonic vibrations. Meanwhile, the comblike elastic member 3 fixed to the piezoelectric element generates surface traveling waves transmitted along with the surface of the elastic member (Rayleigh waves synthesized from longitudinal waves and transverse waves) following the ultrasonic vibrations of the piezoelectric element. As a result, an elliptic motion (a flexural vibration) occurs on the surface of the elastic member, thereby rotating the rotor 5 in press-contact with the elastic member. In the utilization of the flexural vibration, a complex elastic modulus with respect to a flexure direction is of importance. Based on this, a material for the elastic member is selected.

Generally, as the material for the elastic member, a metal material is used in the respect that the metal material can occur surface traveling waves without absorption of the ultrasonic vibration from the piezoelectric element. Unfortunately, a metallic elastic member has a high specific gravity and is hard, thus resulting in a low vibratility in itself, a low moldability, a difficulty in downsizing, a low production efficiency in forming a complicated shape (such as a comb-tooth shape), a corrosion with rust, a difficulty in improving characteristics with an additive, and an insecure electrical insulation. Besides the metallic elastic member, an elastic member made of a resin has been reported, although the plastic elastic member is not in practical use. The reason the plastic elastic member lacks practicality is probably that the plastic elastic member, unlike a metal, absorbs vibrations due to its viscosity, and thus is unsuitable as a transducer (or a vibrator).

Japanese Patent Application Laid-Open Publication No. 5-300764 (JP-5-300764A, Patent Document 1) discloses a driving mechanism which drives a movable body in contact with an elastic member by the elliptic motion occurring in the elastic member coupled to an electromechanical transducer in application of a frequency voltage to the electromechanical transducer, wherein the side where the elastic member contacts with the movable body is made of a resin. According to this document, a metallic elastic member is interposed between the elastic member made of the resin and the electromechanical transducer.

The driving mechanism is disadvantageous in that the elastic member, which contains a metal, has an insufficient vibratility and gathers rust. Moreover, the document fails to disclose the details of the resin. Resins usually absorb ultrasonic vibrations compared with metallic materials, and thus have a low vibration transmission. Further, since the elastic member is a friction-driven type which contacts with a movable body, the elastic member requires a heat resistance enough to stand a frictional heat to be generated. However, resin materials have a low heat resistance compared with metallic materials.

Japanese Examined Patent Application Publication No. 7-89746 (JP-7-89746B, Patent Document 2) discloses a surface-wave motor comprising a stator and a mover, wherein the stator is composed of a piezoelectric element and an elastic member to be excited by the piezoelectric element, the mover is in press-contact with the stator and is an elastic member which moves on the surface of the stator by surface traveling waves of ultrasonic vibrations generated in the stator; at least one of these elastic bodies is formed from a synthetic resin material, the elastic member is obtained by integral-molding a vibrating part having a surface in press-contact with the other elastic member, a supporting part extending from the vibrating part, and a part to be held which is disposed on a periphery of the supporting part.

This document merely discloses that the synthetic resin material includes an engineering plastic, that a material having a low elastic modulus is preferred, and that a ring elastic member material to be used has an elastic modulus of about one-tenth that of a piezoelectric element and of about one-twentieth that of a metal. This document is silent on the details of the synthetic resin.

Japanese Patent Application Laid-Open Publication No. 2006-311794 (JP-2006-311794A, Patent Document 3) discloses a driving device comprising an electromechanical transducer which expands and contracts at the time of application of a voltage, and a movable-body-supporting member which supports a movable body slidably and is bonded to the electromechanical transducer so as to displace (or deform) together with the transducer, the driving device moving the movable body along the supporting member using expansion and contraction of the electromechanical transducer, wherein a material of the supporting member is a fiber-reinforced resin complex, and a synthetic resin material composing the fiber-reinforced resin complex is a liquid crystal polymer or a poly(phenylene sulfide). Specifically, the movable-body-supporting member (driving shaft) corresponding to the elastic member is in the form of a rod, and one end of the driving shaft is bonded to be fixed to one end of the rod-shaped piezoelectric element. The movable body supported to the supporting member is movable at a predetermined frictional force by displacing the supporting member along a longitudinal direction thereof in response to expansion and contraction of the piezoelectric element. That is, the mechanism that the movable body is displaced is as follows: a pulse voltage of a saw-tooth waveform composed of a convulsive rising portion and a moderate trailing portion is applied to increase and decrease the reciprocating motion of the driving shaft in a longitudinal direction thereof, resulting in moving the movable body according to the law of inertia.

Unfortunately, this document fails to disclose a piezoelectric actuator which flexurally vibrates the supporting member. Specifically, the driving device according to Patent Document 3 has no surface contact between the piezoelectric element and the driving shaft, and the driving shaft is driven straight to move the movable body by friction at a reciprocating motion in the longitudinal direction using a saw-tooth pulse. The driving shaft itself is not deformed. Thus, a material for the driving shaft mainly requires a stiffness enough to precisely transmit the vibration of the piezoelectric element. Presumably, the fiber is added in order to maintain the stiffness. That is, the driving mechanism according to Patent Document 3 is quite different in driving principle from a traveling-wave actuator. In other words, the traveling-wave actuator comprises a piezoelectric element and a movable body fixed to the piezoelectric element in surface contact with each other, wherein an elastic member itself is distorted by surface traveling waves (sinusoidal waves) induced in the vibration of the piezoelectric element in a state fixed in surface-contact with the movable body (the elastic member is deflected in conjunction with the vibration of the piezoelectric element) to produce an elliptic motion. Thus, there is no need for the driving shaft according to Patent Document 3 to have a softness necessary for flexural vibrations, and the driving shaft is quite difference in necessary characteristics from an elastic member transmitting flexural vibrations in an ultrasonic motor.

Japanese Patent Application Laid-Open Publication No. 2001-327919 (JP-2001-327919A, Patent Document 4) discloses an acoustic vibration control material which comprises at least two composite material plates in which a plurality of fibers of high elasticity is oriented and arranged regularly in the same direction in abase material, wherein the composite material plates are laminated so that the orientation directions of the fibers in the respective plates are crossed at right angles with each other. This document discloses that the control material includes a plastic molded product in which a polyamide resin or an epoxy resin as a base material is reinforced with a carbon fiber or a SiC fiber.

However, the acoustic vibration control material is designed to control a transmission direction of an acoustical vibration. This document is silent on a flexural vibration of an elastic member.

According to the usage, piezoelectric actuators, such as piezoelectric pumps and linear motors, require a mechanism for expanding (or amplifying) a vibrational displacement (or deformation) in order to apply the vibration (or expansion and contraction) of an electromechanical transducer for the actuator.

As the mechanism for expanding a vibrational displacement of a piezoelectric element, a multilayer piezoelectric actuator is known. The multilayer piezoelectric actuator, which has layered piezoelectric elements, expands a displacement.

Japanese Patent No. 4353690 (JP-4353690B, Patent Document 5) discloses a multilayer piezoelectric actuator in which piezoelectric ceramics layers and internal electrodes are alternately layered, wherein the internal electrodes are connected together every other layer. In the multilayer piezoelectric actuator, the peripheral parts of the internal electrodes are continuously reduced in displacement from inward to outward, and part of the piezoelectric ceramics layer located near to the peripheral parts of the internal electrodes contains a more amount of one or more components selected from manganese, iron, chromium, and tungsten than other components.

Unfortunately, the multilayer piezoelectric actuator is large in size and is not suitable for downsizing.

Another piezoelectric actuator is also known which expands a displacement by mechanically amplifying a motion of a piezoelectric element based on the principle of leverage.

Japanese Patent Application Laid-Open Publication No. 60-81568 (JP-60-81568B, Patent Document 6) discloses a mechanical amplification mechanism for amplifying and driving a motion of an electrostrictive or piezoelectric element, the mechanism comprising the electrostrictive or piezoelectric element, a pair of lever arms as displacement expansion means, and a beam as a displacement expansion means. The electrostrictive or piezoelectric element is joined at one end in an expansion and contraction direction thereof, first ends of the lever arms are joined to the other end of the element via fulcrums, and the beam is supported between second ends of the lever arms and has an acting element as an output terminal.

Disadvantageously, since the mechanical amplification mechanism is also large in size and complicated, the mechanism is not suitable for downsizing.

Meanwhile, a cymbal or moonie piezoelectric actuator has been reported which comprises, as a mechanism for expanding a displacement of a piezoelectric element, a plate-like element fixed to a piezoelectric element with a space between the plate-like element and the piezoelectric element.

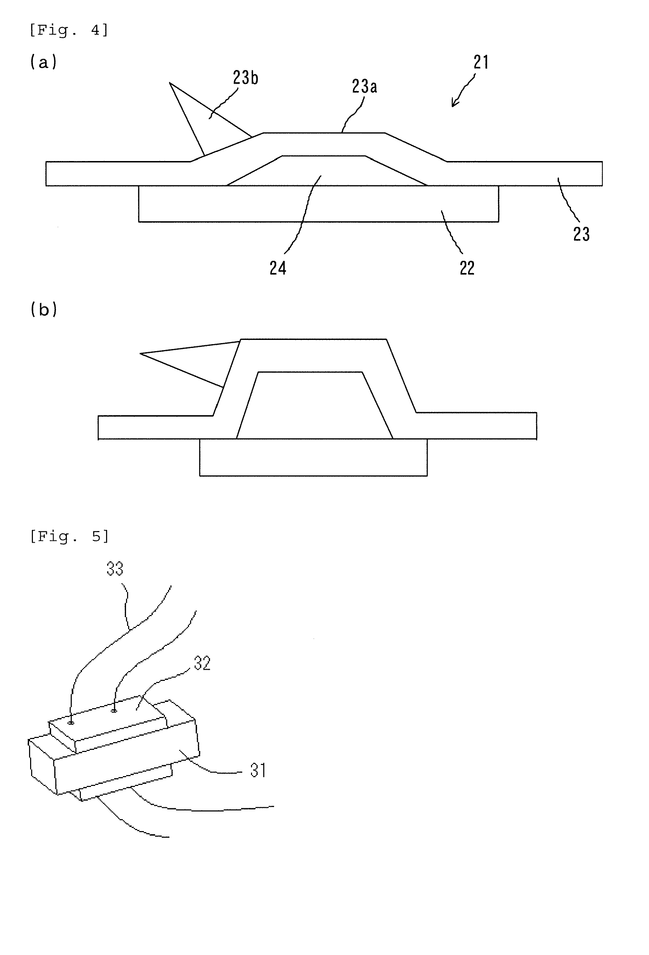

Fig. 3 is a schematic perspective view of a cymbal piezoelectric actuator. Fig. 4 is a schematic view for explaining a displacement mechanism of a cymbal piezoelectric actuator having a projection (nail).

A piezoelectric actuator 11 comprises a plate-like piezoelectric element 12 having a rectangular face and a plate-like displacement expansion element 13 having a ridge 13a raised with flection, wherein the displacement expansion element (or displacement amplification element) 13 is fixed on the piezoelectric element 12. The ridge 13a is formed at the substantially middle of the displacement expansion element in a longitudinal direction thereof. The ridge has a trapezoidal or arch-like form in a cross section perpendicular to a ridgeline direction thereof. There is a trapezoidal cross-sectional space 14 between the ridge and the piezoelectric element 12. For the piezoelectric actuator having the space, the piezoelectric element 12 is formed from a piezoelectric ceramics producing a strain in application of a voltage. The piezoelectric element 12 regularly repeats a strain and a recovery (an expansion and contraction motion) in a surface direction thereof in application of anAC voltage (frequency voltage). Meanwhile, the ridge of the displacement expansion element 13 is easily deformed compared with the portion fixed to the piezoelectric element 12 due to the space 14 interposed between the displacement expansion element 13 and the piezoelectric element 12. Thus the ridge of displacement expansion element 13 is deformed by the expansion and contraction of the piezoelectric element 12 in a surface direction thereof, so that the ridge is displaced (generates a vertical motion) in a direction perpendicular to the surface direction of the piezoelectric element.

For example, as shown in Fig. 4, a cymbal piezoelectric actuator 21 has a ridge 23 having a projection 23b on a side face thereof. In a state that a piezoelectric element 22 expands (or extends) in a surface direction thereof (Fig. 4(a)), the ridge 23a has a reduced height and a gently sloping side face, so that the projection 23b rises in a direction substantially perpendicular to the surface of the piezoelectric element. In contrast, in a state that the piezoelectric element 22 contracts in the surface direction (Fig. 4(b)), the ridge 23a has an increased height and a steeply sloping side face, so that the projection 23b lies substantially parallel to the surface of the piezoelectric element. That is, the projection repeats a displacement motion between the rising state and the lying state by the vibration of the piezoelectric element. Thus, the cymbal piezoelectric actuator having the projection can be used as a driving mechanism which scrapes out a contacting non-vibrating body (movable body) by the projection. The actuator is also available for a linear motor.

A conventional cymbal piezoelectric actuator comprises a displacement expansion element made of a metallic material in the respect that the displacement expansion element can be displaced without absorption of expansion and contraction of a piezoelectric element (or without deflection by expansion and contraction). Unfortunately, a metallic elastic member has a high specific gravity and is hard, thus resulting in a low vibratility in itself, a low moldability, a difficulty in downsizing, a low production efficiency in forming a complicated shape having a projection, a corrosion with rust, a difficulty in improving characteristics with an additive, and an insecure electrical insulation.

As another piezoelectric actuator, Langevin transducers (or Langevin vibrators) are also known. A Langevin transducer has a structure which comprises a piezoelectric crystallized quartz sandwiched between two metal blocks. The Langevin transducer can resonate at a low frequency and is widely used for generation and detection of ultrasonic waves. In order to further increase the performance of the Langevin transducer, various improvements have been attempted to date.

Japanese Patent Application Laid-Open Publication No. 5-236598 (JP-5-236598A, Patent Document 7) discloses a bolt-clamped Langevin transducer provided with an acoustic matching plate. The Langevin transducer comprises a front mass formed from a highly rigid material; a piezoelectric ceramics for converting input electrical signals into supersonic waves, the piezoelectric ceramics having a first end jointed to a first end of the highly rigid material; a rear mass formed from a highly rigid material, the rear mass having a first end joined to a second end of the piezoelectric ceramics; a bolt and a nut for tightening the front mass, the piezoelectric ceramics, and the rear mass; and an acoustic matching plate for impedance-matching water and the front mass, the acoustic matching plate being joined to a second end of the front mass. The acoustic matching plate comprises a synthetic resin having a glass transition temperature higher than the Curie temperature of the piezoelectric ceramics. This document discloses that the front mass and the rear mass are formed from a highly rigid material, such as an aluminum alloy, a titanium alloy, or a stainless steel.

Japanese Patent Application Laid-Open Publication No. 2009-77130 (JP-2009-77130A, Patent Document 8) discloses an ultrasonic transducer comprising a piezoelectric element, a pair of holding members for holding the piezoelectric element therebetween, a buffer member which is fixed to a first one of the holding members and has a hardness lower than that of the first holding member, and an acoustic matching member which is fixed to a second one of the holding members, has an ultrasonic transmission/reception portion in an end thereof, and has an intrinsic acoustic impedance value between that of the second holding member and that of water. This document discloses that a backing plate as the first holding member and a front plate as the second holding member are formed from a stainless steel and that the Q-value (which indicates resonance sharpness) can be reduced by changing the material of the front plate to an aluminum alloy lighter and softer than that of the backing plate.

Japanese Patent Application Laid-Open Publication No. 5-37999 (JP-5-37999A, Patent Document 9) discloses a wideband ultrasonic probe which has a Langevin transducer structure having resonance blocks symmetrically disposed on both sides of a pair of piezoelectric vibrators, wherein the resonance blocks comprise a plastic. This document discloses that the resonance blocks having wideband characteristics comprise an epoxy compound material. Other plastic materials are not described in this document.

Japanese Patent Application Laid-Open Publication No. 2007-274191 (JP-2007-274191A, Patent Document 10) discloses an ultrasonic transducer in which a front plate, a backing plate, and a piezoelectric ceramics body disposed between the front plate and the backing plate are integrally fixed with an axial bolt, wherein the front plate is made of a resin. This document discloses that the material of the front plate preferably includes a polypropylene-series resin having an easiness of machinery cutting, a polycarbonate resin having a high transparency, and an acrylic resin having both excellent characteristics.

Disadvantageously, the ultrasonic transducers described in Patent Documents 7 to 10 have a low vibration speed on a surface thereof and do not have sufficient output characteristics yet.

### RELATED ART DOCUMENTS

### PATENT DOCUMENTS

Patent Document 1: JP-5-300764A (Claim 1, Figs. 1 and 3)
Patent Document 2: JP-7-89746B (Claim 1, page 2, column 4, lines 19 to 21)
Patent Document 3: JP-2006-311794A (Claim 1, paragraphs [0004] to [0006], [0021] and [0022])
Patent Document 4: JP-2001-327919A (Claim 1, paragraphs [0010], [0022] and [0026])
Patent Document 5: JP-4353690B (Claim 1)
Patent Document 6: JP-60-81568A (Claims)
Patent Document 7: JP-5-236598A (Claims, paragraph [0003])
Patent Document 8: JP-2009-77130A (Claims, paragraphs [0015] and [0047])
Patent Document 9: JP-5-37999A (Claims, paragraph [0012], Examples)
Patent Document 10: JP-2007-274191A (Claims, paragraph [0013], Examples)

### SUMMARY OF THE INVENTION

### PROBLEMS TO BE SOLVED BY THE INVENTION

It is therefore an object of the present invention to provide an elastic member for an actuator, and a piezoelectric actuator comprising the elastic member; the elastic member has an excellent transmission of flexural vibration (elliptic motion) although the elastic member is formed from a resin.

Another object of the present invention is to provide an elastic member for an actuator, and a piezoelectric actuator comprising the elastic member; the elastic member has an excellent moldability or lightness in weight and is easy to downsize or process into a complicated shape.

It is still another object of the present invention to provide an elastic member for an actuator, and a piezoelectric actuator comprising the elastic member; the elastic member has excellent electrical isolation and corrosion resistance.

It is a further object of the present invention to provide a displacement expansion element which can highly extend (or amplify) the vibration (or expansion and contraction) displacement of an electromechanical transducer, and a displacement-expanding piezoelectric actuator comprising the displacement expansion element.

It is a still further object of the present invention to provide a Langevin transducer which can vibrate a surface thereof at a high speed even in application of a low electric current (or a low voltage).

It is another object of the present invention to provide a Langevin transducer which can reduce an energy loss and can transmit and receive ultrasonic waves at a high efficiency.

A still another object of the present invention is to provide a Langevin transducer which offers small size even for use at a low frequency and easily allows control of a resonant wavelength.

### MEANS TO SOLVE THE PROBLEMS

The inventors of the present invention made intensive studies to achieve the above objects and finally found that an actuator provided with an electromechanical transducer (e.g., a piezoelectric element) and an elastic member formed from a crystalline resin has the following improvements in spite of the resin elastic member: for a flexurally vibrating actuator to improve transmission of flexural vibration, for a displacement-expanding actuator to highly expand (or amplify) a vibration (or expansion and contraction) displacement of the electromechanical transducer, and for a Langevin transducer to vibrate a surface thereof at a high speed even in application of a low electric current (or a low voltage). The present invention was accomplished based on the above findings.

That is, an aspect of the present invention provides an elastic member of an actuator which comprises an electromechanical transducer (or an electromechanical conversion element) expandable and contractible in response to application of an AC voltage. The elastic member is to be fixed to the electromechanical transducer. The actuator is any one of the following (1) to (3):
(1) an actuator contactable with a non-vibrating body, the actuator flexurally vibrating in response to expansion and contraction of the electromechanical transducer to drive or actuate the actuator itself or the non-vibrating body,
(2) an actuator comprising a displacement expansion mechanism for amplifying an expansion and contraction displacement of the electromechanical transducer, and
(3) an actuator comprising a pair of resonance members for holding the electromechanical transducer therebetween, at least one of the resonance members reducing a vibration frequency of expansion and contraction of the electromechanical transducer.
The elastic member comprises a crystalline resin.

The electromechanical transducer may be a piezoelectric element. The crystalline resin may comprise a poly(aryl ketone) resin or a poly(phenylene sulfide) resin. The elastic member may further comprise a filler (particularly a fibrous (or fiber) filler). The fibrous filler may be oriented parallel to an expansion and contraction direction of the electromechanical transducer. The fibrous filler may comprise at least one member selected from the group consisting of a carbon fiber, a glass fiber, and an aramid fiber. The fibrous filler may be a carbon fiber having an average fiber diameter of 0.1 to 50 µm and an average fiber length of 1 µm to 2 mm. The ratio of the filler relative to 100 parts by weight of the thermoplastic resin may be about 10 to 60 parts by weight.

The actuator maybe anultrasonicmotor, the elastic member of the actuator may have a plurality of raised portions (or convex portions) on an opposite side with respect to a side fixed to the piezoelectric element, and the raised portions may be contactable with an non-vibrating body. Preferably, the piezoelectric actuator maybe a linear ultrasonic motor, and the plurality of raisedportions in the elastic member may have a saw-tooth form in a cross section thereof. The piezoelectric actuator may be a rotary ultrasonic motor, and the elastic member of the actuator may have a comb-tooth portion.

The actuator may comprise a displacement expansion mechanism for amplifying an expansion and contraction displacement of the piezoelectric element, and the elastic member of the actuator may have a plate-like form having a raised portion to form a space between the elastic member and the piezoelectric element fixed (or attached) to the elastic member. The raised portion may comprise a ridge being raised with flection or curvature. The ridge may have a trapezoidal form in a cross section perpendicular to a ridgeline direction thereof. The ridge may have a projection on a side face thereof.

The elastic member may be a resonance member of a Langevin transducer.

Another aspect of the present invention provides a piezoelectric actuator comprising a piezoelectric element and the elastic member.

The piezoelectric actuator may be a rotary ultrasonic motor that is contactable with a rotor and flexurally vibrates in response to expansion and contraction of the piezoelectric element to drive or actuate the actuator itself or the rotor.

The elastic member may be a displacement expansion element, and the piezoelectric actuator may be a cymbal or moonie piezoelectric actuator.

The piezoelectric actuator may be a Langevin transducer comprising a piezoelectric element and a pair of resonance members that hold the piezoelectric element therebetween, and at least one of the resonance members may be the elastic member. Generally, in a case where one resonance member comprises a resin, it is assumed that the actuator is difficult to vibrate because of an increased absorption of ultrasonic waves compared with a metal. Whereas, the use of the elastic member surprisingly allows the actuator to vibrate at a high efficiency without decay of ultrasonic waves. One of the resonance members may contain a resin different in species from a resin contained in the other resonance member, or may preferably contain a resin that is the same species as a resin contained in the other resonance member. The piezoelectric element and one of the resonance members and/or the other resonance member may be pressed with a joining means (e.g., a screw) to contact with (or be attached to) each other.

As used herein, the "elastic member" means a molded product (or a formed product) which comprises (or is formed from) a composition containing a thermoplastic resin and a filler, is to be fixed to an electromechanical transducer (e.g., a piezoelectric element) in use, and can transmit the vibration (expansion and contraction) of the electromechanical transducer. The elastic member is not limited to an elastic member for an ultrasonic motor and encompasses a displacement expansion element for a displacement-expanding actuator and a resonance member for a Langevin transducer.

### EFFECTS OF THE INVENTION

According to the present invention, an elastic member of a flexurally vibrating actuator comprises a crystalline resin, and thus the transmission of flexural vibration (elliptic motion) can be improved in spite of the resin elastic member. In particular, the elastic member allows the reduction of vibration hysteresis and the minimization of loss probably because the elastic member increases an energy-transmitting efficiency due to a small difference in acoustic impedance from an electromechanical transducer (particularly, a piezoelectric element).

Moreover, according to the present invention, a displacement expansion element of a displacement-expanding actuator is formed from a crystalline resin and thus allows a significant expansion (amplification) of an expansion and contraction displacement of an electromechanical transducer. A combination of the crystalline resin and a fibrous filler allows a larger displacement expansion with a conventional metallic material. In particular, although the crystalline resin has a specific gravity lower than that of a metal, the displacement expansion element shows a displacement expansion function (vibration speed) equivalent or more to the metal. The displacement expansion element has a higher function per weight and is suitable for an application that requires lightness in weight. For example, at the same resonance frequency, a displacement expansion element made of the resin can be downsized compared with one made of a metallic material. Further, the displacement expansion element made of the resin also has improved electrical isolation and corrosion resistance.

Further, according to the present invention, at least one of a pair of resonance members holding an electromechanical transducer therebetween of a Langevin transducer is formed from a specified crystalline thermoplastic resin, and thus the Langevin transducer allows the vibration of the surface at a high speed even in application of a low electric current (or a low voltage) and makes a maximum vibration speedhigher. Inparticular, the Langevin transducer according to the present invention allows the transmission and reception of ultrasonic waves at a high efficiency due to a significant reduction of energy loss. Moreover, the Langevin transducer according to the present invention is small and lightweight and is easily small-sized even for an application at a low frequency. Further, the present invention allows easy control of a resonant wavelength (or sonic speed) by adjusting the orientation or amount of the fibrous filler.

Moreover, the elastic member formed from a resin has excellent moldability or lightness in weight and is easy to downsize or process into a complicated shape. The elastic member also allows the improvement in electrical isolation and corrosion resistance.

### BRIEF DESCRIPTION OF DRAWINGS

[Fig. 1] Fig. 1 is a schematic side elevational view of a rotary ultrasonic motor.
[Fig. 2] Fig. 2 is a schematic perspective view of an elastic member of the rotary ultrasonic motor shown in Fig. 1.
[Fig. 3] Fig. 3 is a schematic perspective view of a cymbal piezoelectric actuator.
[Fig. 4] Fig. 4 is a schematic view for explaining a displacement mechanism of a cymbal piezoelectric actuator having a projection.
[Fig. 5] Fig. 5 is a schematic view for explaining a method of measuring a vibration speed of an elastic member.
[Fig. 6] Fig. 6 is a schematic side elevational view of a linear ultrasonic motor in accordance with an embodiment of the present invention.
[Fig. 7] Fig. 7 is a schematic perspective view of a stator of the linear ultrasonic motor shown in Fig. 6.
[Fig. 8] Fig. 8 is a schematic cross-sectional view of a Langevin transducer in accordance with an embodiment of the present invention.
[Fig. 9] Fig. 9 is a graph showing vibration speeds of elastic bodies obtained in Example 1 and Comparative Example 1.
[Fig. 10] Fig. 10 is a graph showing vibration speeds of elastic bodies obtained in Examples 2 and 3.
[Fig. 11] Fig. 11 is a schematic perspective view of cymbal piezoelectric actuators produced in Examples.
[Fig. 12] Fig. 12 is schematic view showing an experimental system for evaluating Langevin transducers of Examples.
[Fig. 13] Fig. 13 is a graph showing a relation between electric current and vibration speed in Langevin transducers of Examples.

### DESCRIPTION OF EMBODIMENTS

### [Elastic member for actuator]

The elastic member for an actuator according to the present invention is fixed to a plate-like electromechanical transducer which expands and contracts in a surface direction thereof in response to application of an AC voltage (in particular, a piezoelectric element for generating vibration in response to application of an AC voltage) and is used for various actuators (an ultrasonic motor, a displacement-expanding actuator, a Langevin transducer). The elastic member contains a thermoplastic resin and a filler (in particular, a fibrous filler) ; this makes it possible to improve characteristics of various actuators.

### (Crystalline resin)

The crystalline resin involves an excellent transmission of vibration. Specifically, an elastic member molded into a plate form is sandwiched and fixed between plate-like piezoelectric elements so that the elastic member and the piezoelectric elements may be in surface contact with each other; in a case where the elastic member is forced to vibrate at a resonance frequency by applying a frequency voltage to the piezoelectric element and a voltage is increased, the elastic member has a maximum vibration speed of about not less than 300 mm/sec., preferably about not less than 500 mm/sec. (for example, about 500 to 1500 mm/sec.), and more preferably about not less than 700 mm/sec. (for example, about 700 to 1000 mm/sec.). In a case where the vibration speed is less than 300 mm/sec., it is difficult to drive a movable body (or the elastic member itself) due to a low transmission of vibration to the movable body (or a low driving of the elastic member itself).

According to the present invention, the vibration speed of the crystalline resin can be measured by a method shown in Fig. 5. Specifically, the crystalline resin is injection-molded into a flat plate 10 cm square by 3 mm thick, the resulting molded product is cut to a piece 1 cm by 3 cm by machinery cutting to give a resin elastic member 31. The resulting resin elastic member 31 is sandwiched between two plate-like piezoelectric elements 32 ("C-123" manufactured by Fuji Ceramics Corporation, 1 cm by 2 cm by 1 mm) as shown in Fig. 5, and the elastic member and the piezoelectric elements are pasted together with an adhesive ("Araldite standard" manufactured by Huntsman Japan KK) and cured for 24 hours for hardening. Copper wires 33 are soldered to electrodes of the piezoelectric elements 32, and vibration is given at a resonance frequency. The maximum speed of the vibration is measured by a laser Doppler velocimeter. An increase in the vibration speed is observed as the voltage rises. At a voltage not lower than a specific voltage corresponding to dynamical properties of the resin elastic member, the vibration speed is retained or reduced, and the maximum speed is defined as a vibration speed.

The crystalline resin has a glass transition temperature (Tg) of not lower than 30°C. In light of moldability or others, the glass transition temperature may be, for example, about 50 to 450°C, preferably about 70 to 350°C, and more preferably about 75 to 300°C (particularly about 80 to 200°C). Moreover, the glass transition temperature may be not lower than 70°C, for example, about 75 to 450°C, preferably about 80 to 430°C (e.g., about 100 to 400°C), and more preferably about 80 to 300°C (particularly about 80 to 160°C). Preferably, the crystalline resin has a glass transition temperature higher than the Curie temperature of the piezoelectric element. The operation of the piezoelectric actuator (such as an ultrasonic motor or a displacement-expanding actuator) increases the temperature of the elastic member because of heat generated by vibration, increase in atmospheric temperature, and heat stored by friction, resulting in the reduction of vibratility. Further, the elastic member decreases in frictional coefficient and in transmission of vibration to a movable body. A crystalline resin having too low a glass transition temperature significantly decreases in the transmission of vibration. In addition, the crystalline resin having too low a glass transition temperature decreases in abrasion resistance at a high temperature and is easy to wear or break in a high-temperature state induced by frictional heat. In contrast, a crystalline resin having too high a glass transition temperature is unworkable (or unprocessible) because of a high molding temperature approaching a decomposition temperature thereof. The crystalline resin to be used in the present invention has a moderate elastic modulus and thus the elastic member has an excellent vibratility. In particular, for a comblike elastic member of an ultrasonic motor, the elastic member allows the ultrasonic motor to possess an improved driving force because the elastic member has a large vibratility at the tip (or tooth crest) contacting with a non-vibrating body (in particular, a movable body). For a displacement-expanding actuator, the elastic member has an excellent displacement-expanding function. For example, in a case where the elastic member is used for a linear motor, the elastic member allows the linear motor to possess an improved driving force because the elastic member has a large vibratility at the tip contacting with a non-vibrating body (in particular, a movable body).

As used therein, the glass transition temperature can be measured in accordance with DSC method of ASTM 3418.

The crystalline resin may have a density (a specific gravity) of, for example, not more than 3 g/cm³, preferably about 0.8 to 2.5 g/cm³, and more preferably about 0.9 to 2 g/cm³ (particularly about 1 to 1. 5 g/cm³). A crystalline resin having too high a density decreases in vibratility, resulting in the reduction of the drive transmission of the movable body. The density canbe measured in accordance with ISO 1183. According to the present invention, even in a case where a displacement expansion element for a displacement-expanding actuator is formed from a crystalline resin having a low specific gravity, the displacement expansion element has a displacement expansion function equivalent or more than that of an element formed from a metal having a high specific gravity and has a high displacement expansion function in terms of specific gravity.

The crystalline resin may include, but should not be limited to, a crystalline thermoplastic resin (synthetic resin). Examples of the crystalline thermoplastic resin may include an olefinic resin (e.g., a cyclic olefinic resin, such as an ethylene-norbornene copolymer), a styrene-series resin (e.g., a syndiotactic polystyrene), a polyacetal-series resin (e.g., a polyoxymethylene), a polyester-series resin [e.g., a poly(alkylene arylate), such as a poly(ethylene terephthalate), a poly(butylene terephthalate), or a poly(ethylene naphthalate); a poly(glycolic acid)-series resin; and a liquid-crystal polyester], a polybenzimidazole-series resin, a polyamide-series resin (e.g., an aliphatic polyamide and an aromatic polyamide), a polyamideimide resin, a poly(phenylene sulfide)-series resin, a poly(aryl ketone)-series resin, and a fluororesin (e.g., a polytetrafluoroethylene). These crystalline resins may be used alone or in combination.

Among these crystalline resins, preferably, an engineering plastic may be used, since the engineering plastic can inhibit decay or loss of vibrational energy and has a large displacement expansion function and an excellent heat resistance or abrasion resistance. For example, an engineering plastic widely used may include a syndiotactic polystyrene resin, an aromatic polyamide-series resin (such as nylon MXD6), a poly(aryl ketone) resin, a poly(phenylene sulfide) resin, a poly(glycolic acid)-series resin, and a liquid-crystal polyester.

Moreover, among these crystalline resins, a poly (aryl ketone) resin, a poly(phenylenesulfide)-series resin, a polybenzimidazole-series resin, a polyamideimide resin, and an aromatic polyamide resin are preferred in light of a high transmission of vibration or a high displacement expansion function. In particular, these crystalline resins allows a reduction in weight and an excellent adhesion to the piezoelectric element compared with metals; can have a reduced energy loss due to the absence of unreacted curable monomers unlike thermosetting resins; and are hardly change the molecular structure thereof and have a small mechanical loss (tanδ) anda reduced energy loss compared with non-crystalline resins. Thus, for a Langevin transducer, the crystalline resin allows transmission and reception of ultrasonic waves at a higher efficiency in application of the same electric current (or voltage) compared with conventional materials.

### (1) Poly(aryl ketone) resin

The poly(aryl ketone) resin is an aromatic polyetherketone in which aryl skeletons are bonded through an ether bond and a ketone bond. The poly(aryl ketone) resin is classified into a polyetherketone-series resin, a polyetheretherketone-series resin, and a polyetherketoneketone-series resin. Each one of the aryl skeletons is usually a phenylene group. The aryl skeletons may include other arylene groups, for example, a substituted phenylene group (e.g., an alkylphenylene group in which a phenylene group has a substituent such as a C₁₋₅alkyl group, or an arylphenylene group in which a phenylene group has a substituent such as phenyl group) and a group represented by the formula -Ar-X-Ar- (wherein Ar represents a phenylene group, X represents S, SO₂, or a direct bond). The proportion of other arylene groups in the aryl skeletons of the poly(aryl ketone) resin may for example be not more than 50% by mol (particularly not more than 30% by mol). These poly (aryl ketone) resins may be used alone or in combination. Among these poly(aryl ketone) resins, the polyetheretherketone-series resin, which has a high ether-bond content, is preferred in light of excellent mechanical properties, such as impact resistance.

As the polyetheretherketone-series resin, a polyetheretherketone obtainable by polycondensation of a dihalogenobenzophenone and hydroquinone is commercially available as the trade name "PEEK" series manufactured by VICTREX and the trade name "VESTAKEEP" series manufactured by EVONIK. The polyetheretherketone-series resin may be a polyetheretherketone in which a phenylene group has a substituent (such as a C₁₋₃alkyl group), or a polyetheretherketone having other aryl skeletons (such as naphthylene groups) instead of phenylene groups.

The poly(aryl ketone) resin (particularly the polyetheretherketone-series resin) may have a weight-average molecular weight of, for example, about 5000 to 30000, preferably about 6000 to 25000, and more preferably about 8000 to 20000 in GPC (in terms of polystyrene).

The poly(aryl ketone) resin (particularly the polyetheretherketone-series resin) may have a melt volume-flow rate (MVR) of, for example, about 10 to 200 cm³/10min., preferably 30 to 150 cm³/10min., and more preferably 50 to 100 cm³/10min. in accordance with ISO 1133 (380°C/5kg).

In order to improve the transmission of vibration, the poly(aryl ketone) resin (particularly the polyetheretherketone-series resin) (the resin alone free from a filler) may have a tensile strength, a breaking strength, a yield elongation, a breaking elongation, and modulus of elasticity in tension within the following ranges in the tensile test (50 mm/min.) in accordance with ISO 527-1/-2.

That is, for example, the tensile strength may be about 10 to 300 MPa, preferably about 50 to 200 MPa, and more preferably about 80 to 150 MPa.

For example, the yield elongation may be about 1 to 10%, preferably about 2 to 8%, and more preferably about 3 to 6%.

For example, the breaking elongation may be about not less than 10%, e.g. , about 10 to 100%, preferably about 15 to 50%, and more preferably about 20 to 40%.

For example, the modulus of elasticity in tension may be about 1000 to 10000 MPa, preferably about 2000 to 5000 MPa, and more preferably about 3000 to 4000 MPa.

### (2) Poly(phenylene sulfide)-series resin

The poly(phenylene sulfide)-series resin [poly(phenylene thioether)-series resin] may include a homopolymer and copolymer having a poly(phenylenesulfide) skeleton - (Ar-S) - [whereinAr represents a phenylene group]. For example, the copolymer may further contain a substituted phenylene group or a group represented by the formula -Ar-X-Ar- (wherein Ar represents a phenylene group, X represents O, SO₂, CO, or a direct bond), in addition to the phenylene group (-Ar-). The substituted phenylene group may include an alkylphenylene group in which a phenylene group has a substituent such as a C₁₋₅alkyl group, and an arylphenyl group in which a phenylene group has a substituent such as a phenyl group. The poly(phenylene sulfide)-series resin may be a homopolymer composed of the same repeating phenylene sulfide units containing such a phenylene group. In light of easy processability of a composition for the elastic member, the poly(phenylene sulfide)-series resin may be a copolymer composed of different repeating units.

As the homopolymer, there may be preferably used a substantially linear homopolymer containing a p-phenylene sulfide group as a repeating unit. The copolymer may contain different two or more groups of the above phenylene sulfide groups. Preferably, the copolymer may be a copolymer containing a p-phenylene sulfide group as a main repeating unit and a m-phenylene sulfide group. From a physical viewpoint, such as heat resistance, moldability, or mechanical properties, a particularly preferred one includes a substantially linear copolymer containing a p-phenylene sulfide group in a proportion of not less than 60% by mol (preferably 70% by mol).

The poly (phenylene sulfide) resin may be a polymer having an improved moldability (or processability), wherein the polymer is obtainable by oxidative-crosslinking or heat-crosslinking a linear polymer having a relatively low molecular weight for increasing the melt viscosity. The poly(phenylene sulfide) resin may also be a substantially linear polymer having a high molecular weight, wherein the polymer is obtainable by condensation polymerization of monomers containing mainly difunctional monomers. In consideration of the physical properties of the resulting molded product, the substantially linear polymer obtainable by condensation polymerization is more preferred. In addition to the above polymers, as the poly(phenylene sulfide) resin, there maybe used a branched or crosslinked poly(phenylene sulfide) resin obtainable by polymerizing monomers, each having a tri- or more-functional group, or may be used a resin composition containing the resin and the above-mentioned linear polymer.

The poly(phenylene sulfide) resin to be used may include a poly(phenylene sulfide ketone) (PPSK) or a poly(biphenylene sulfide sulfone) (PPSS), in addition to a poly(phenylene sulfide) (such as a poly-1,4-phenylene sulfide) or a poly(biphenylene sulfide) (PBPS). The poly(phenylene sulfide) resins may be used alone or in combination.

The poly(phenylene sulfide) resin has a number-average molecular weight of, for example, about 500 to 100000, preferably about 700 to 50000, and more preferably about 1000 to 30000 in GPC (in terms of polystyrene).

The poly (phenylene sulfide) resin (the resin alone free from a filler) may have a melt flow rate (MFR) of about 1 to 10000 g/10min., preferably about 5 to 5000 g/10min., and more preferably about 10 to 3000 g/10min. (particularly about 20 to 2000 g/10min.) in accordance with Japanese Industrial Standards (JIS) K7315-1 (315°C, a load of 5 kg).

In order to improve the transmission of vibration, the poly(phenylene sulfide) resin (the resin alone free from a filler) may have a tensile strength, a breaking elongation, and a modulus of elasticity in tension within the following ranges in the tensile test (50 mm/min.) in accordance with ISO 527-1/-2.

That is, for example, the tensile strength may be about 10 to 300 MPa, preferably about 50 to 250 MPa, and more preferably about 60 to 200 MPa.

For example, the breaking elongation may be about 1 to 30%, preferably about 1 to 20%, and more preferably about 1 to 15%.

For example, the modulus of elasticity in tension may be about 1000 to 10000 MPa, preferably about 2000 to 5000 MPa, and more preferably about 3000 to 4000 MPa.

### (3) Polybenzimidazole-series resin

The polybenzimidazole-series resin may be a polybenzimidazole. In addition, some or all of benzene skeletons in the polybenzimidazole may be replaced with other aromatic rings (e.g., a biphenyl ring, a naphthalene ring), or a copolymer unit (e.g., an arylene group, such as phenylene) may be contained in addition to the benzimidazole skeleton. These polybenzimidazole-series resins may be used alone or in combination. Among these polybenzimidazole-series resins, the polybenzimidazole is widely used.

### (4) Polyamideimide resin

The polyamideimide resin is a polymer having an imide bond and an amide bond in a main chain thereof. The polyamideimide resin may be a polyamideimide obtainable by allowing a tricarboxylic acid anhydride to react with a polyisocyanate, or may be a polyamideimide obtainable by allowing a tricarboxylic acid anhydride to react with a polyamine to a product having an imide bond and then allowing the product to react with a polyisocyanate for amidation. As the tricarboxylic acid anhydride, usually, trimellitic acid anhydride is employed. Preferably, the polyamine or the polyisocyanate may include a polyamine containing an aromatic amine (such as phenylenediamine, naphthalenediamine, 2,2-bis(aminophenyl)propane, or 4,4'-diaminodiphenyl ether) or a polyisocyanate containing an aromatic isocyanate (such as phenylene diisocyanate, xylylene diisocyanate, or tolylene diisocyanate). For example, the polyamideimide may be a polyamideimide described in Japanese Patent Application Laid-Open Publication No. 59-135126.

### (5) Aromatic polyamide resin

The aromatic polyamide resin is a polyamide resin containing an aromatic ring. For example, the aromatic polyamide resin may include a polyamide obtainable by polymerization of an aliphatic diamine and an aromatic dicarboxylic acid, and a polyamide obtainable by polymerization of an aromatic diamine and an aliphatic dicarboxylic acid. Examples of the aliphatic diamine may include an alkylenediamine, e.g., ethylenediamine, hexamethylenediamine, and nonoamethylenediamine. Examples of the aromatic diamine may include phenylenediamine, metaxylylenediamine, and naphthalenediamine. Examples of the aliphatic dicarboxylic acid may include succinic acid, adipic acid, and sebacic acid. Examples of the aromatic dicarboxylic acid may include terephthalic acid, isophthalic acid, and phthalic anhydride. Among these aromatic polyamide resins, a preferred one includes a polyamide obtainable by polymerization of a C₆₋₁₂alkylenediamine (such as hexamethylenediamine or nonamethylenediamine) and an aromatic dicarboxylic acid (such as terephthalic acid).

In particular, In light of excellent heat resistance, abrasion resistance, and electrical isolation, the poly (aryl ketone) resin or the poly (phenylene sulfide) resin is preferred. In light of an excellent transmission of flexural vibration or an excellent displacement expansion function, the poly(phenylene sulfide) resin is particularly preferred.

The elastic member for an actuator according to the present invention contains the crystalline resin as a main component. The proportion of the crystalline resin in the elastic member is usually not less than 50% by weight (e.g., 50 to 100% by weight), preferably not less than 60% by weight (e.g., 60 to 99% by weight), and more preferably not less than 70% by weight (e.g., 70 to 95% by weight).

### (Filler)

According to the application, the elastic member of the present invention may contain a filler in addition to the crystalline resin. A combination of the crystalline resin and the filler can not only improve the mechanical properties including impact resistance, dimensional stability, and stiffness but also improve the transmission of flexural vibration or the displacement expansion function. While on the one hand the filler can improve the above-mentioned properties, on the other hand the filer sometimes wears a contacting non-vibrating body during long-term use, resulting in the decrease of the driving force. For that reason, for an application in which the durability is required (such as a wheel motor), it is preferred to be substantially free from the filler.

The filler may be an organic filler or may be an inorganic filler. The form of the filler is not particularly limited to a specific one, and may be a fibrous (or fiber) filler or maybe a granular or plate-like filler.

The fibrous filler may include an inorganic fibrous filler or an organic fibrous filler. As the inorganic fibrous filler, for example, there may be mentioned a ceramics fiber (e.g., a glass fiber, a carbon fiber, an asbestos fiber, a silica fiber, a silica-alumina fiber, a zirconia fiber, a boron nitride fiber, a silicon nitride fiber, and a potassium titanate fiber) and a metal fiber (e.g., a stainless-steel fiber, an aluminum fiber, a titanium fiber, a copper fiber, and a brass fiber). Examples of the organic fibrous filler may include an organic fiber having a high melting point, such as an aramid fiber, a fluororesin fiber, or an acrylic fiber. These fibrous fillers may be used alone or in combination.

The granular or plate-like filler may include, for example, carbon black, graphite, silicon carbide, silica, silicon nitride, boron nitride, quartz powder, hydrotalcite, a glass (such as glass flake, glass bead, glass powder, or milled glass fiber), a carbonate (such as calcium carbonate or magnesium carbonate), a silicate (such as calcium silicate, aluminum silicate, talc, mica, kaolin, clay, diatomite, or wollastonite), a metal oxide (such as iron oxide, titanium oxide, zinc oxide, or alumina), a sulfate (such as calcium sulfate or barium sulfate), and a variety of metal powders or metal foils. These granular or plate-like fillers may be used alone or in combination.

If necessary, these fillers (in particular, the inorganic fiber) maybe surf ace-treated with a sizing agent or a surface-treating agent (for example, a functional compound, such as an epoxy-series compound, an isocyanate-series compound, a silane-series compound, or a titanate-series compound). The treatment of the filler may be conducted simultaneously with the addition of the filler or prior to the addition of the filler. The amount to be used of the sizing agent or the surface-treating agent is not more than 5% by weight, preferably about 0.05 to 2% by weight, relative to the amount of the filler.

Among these fillers, the fibrous filler is preferred since the fibrous filler can improve the transmission of flexural vibration or the displacement expansion function by adjusting the orientation state of the filler. In particular, the inorganic fiber (such as a glass fiber or a carbon fiber) and the organic fiber (such as an aramid fiber) are widely used. In light of a high heat resistance, an improvement in transmission of vibration or displacement expansion function and mechanical properties, the inorganic fiber is preferred. In consideration of excellent lightness in weight and softness, the carbon fiber is particularly preferred. It is sufficient that at least part of the fibrous filler in the elastic member is orientated. The fibrous filler may contain not only a continuous fiber but also a short fiber (such as a whisker).

For example, the fibrous filler has an average fiber diameter of about 0.1 to 50 µm, preferably about 1 to 30 µm, and more preferably about 2 to 20 µm. In a case where the filler has too small a fiber diameter, it is difficult to improve the transmission of vibration or the displacement expansion function and the mechanical properties. Similarly, in a case where the filler has too large a fiber diameter, it is difficult to improve the transmission of vibration or the displacement expansion function and the mechanical properties.

The fibrous filler has an average fiber length of, for example, about 1 µm to 2 mm, preferably about 10 µm to 1.5 mm, and more preferably about 100 µm to 1 mm. In a case where the filler has too small a fiber length, it is difficult to improve the transmission of vibration or the displacement expansion function and the mechanical properties. In a case where the filler has too large a fiber length, the filler is difficult to orient, and thus the transmission ofvibration or the displacement expansion function is decreased.

The fibrous filler has an average aspect ratio of, for example, about 3 to 500, preferably about 5 to 100, and more preferably about 10 to 50. In a case where the fibrous filler has too small anaspect ratio, it is difficult to improve the transmission of vibration or the displacement expansion function and the mechanical properties. In a case where the fibrous filler has too large an aspect ratio, the filler is difficult to orient, and thus the transmission of vibration or the displacement expansion function is decreased.

In this description, the average fiber diameter of the fibrous filler can be measured by visual observation or by various observation apparatuses, such as a light microscope or a scanning electron microscope (SEM). Preferably, the average fiber diameter is the average value of any 10 or more points measured using a light microscope.

The average fiber length is determined by cutting about 5 g of a sample from any position of the elastic member, ashing the sample at 650°C, taking fibers out of the sample, and observing some (about 500 pieces) of the fibers using the above-mentioned observation apparatus.

According to the present invention, in order to improve the transmission of flexural vibration or the displacement expansion function, it is preferred that the fibrous filler be oriented toward a specific direction. It is particularly preferred that the fibrous filler be oriented parallel to the surface direction of the contact surface of the electromechanical transducer (inparticular, a piezoelectric element) with the elastic member (or parallel to the vibration direction of the piezoelectric element). The elastic member of the present invention may be a layered product composed of a plurality of layers. Preferably, the orientationdirectionof the fibrous filler in each layer is the same. The fibrous filler in a single-layer elastic member is usually oriented toward a specific direction.

The expansion and contraction direction (vibration direction) of the electromechanical transducer (in particular, a piezoelectric element) can suitably be selected. For example, the expansion and contraction direction may be a direction perpendicular to the contact surface of the electromechanical transducer with the elastic member (for a plate-like piezoelectric element, the thickness direction). In order to easily give flexural vibrations to the elastic member, the expansion and contraction direction is preferably the same as the surface direction of the contact surface of the electromechanical transducer with the elastic member (for a plate-like piezoelectric element, usually the surface direction). Moreover, in a case where the plate-like electromechanical transducer has a rectangular face, the expansion and contraction direction is preferably the same as the longitudinal direction. For a ring elastic member (rotary ultrasonic motor), the expansion and contraction direction is preferably the circumferential direction. It is not clear why the fibrous filler oriented parallel to the expansion and contraction direction of the electromechanical transducer improves the transmission of flexural vibration or the displacement expansion function. In a case where the fibrous filler is oriented parallel to the expansion and contraction direction, the fibrous filler is stressed in the flexure direction. For that reason, probably, the effect of the fibrous filler reduces the tanδ (loss coefficient), resulting in the improvement of the characteristics. In particular, for the displacement expansion element, probably the ridge is easy to deform. In a case where the orientation direction of the fibrous filler is not parallel to the vibration direction, there is a small deformation of the fibrous filler due to the expansion and contraction vibration (flexural vibration) of the transducer, whereas there is a large deformation of the fibrous filler due to the change of the distance between the fibrous fillers. Thus, it is probable that the reduction of the tanδ due to the fibrous filler is smaller.

For the ring elastic member, in light of efficient production, the vibration direction of the electromechanical transducer (in particular, a piezoelectric element) maybe perpendicular to the contact surface of the electromechanical transducer with the elastic member.

According to the present invention, it is preferred that the frequency of the alternating current to be applied to the electromechanical transducer (in particular, a piezoelectric element) be the same as the resonance frequency at the orientation direction of the fibrous filler in the elastic member to which the electromechanical transducer is fixed; the tanδ is small. In a case where the frequency of the alternating current deviates from the resonance frequency, the energy imparted to the elastic member is converted into heat energy in a higher proportion, and thus the vibrational energy transmitted to the non-vibrating body is significantly small.

The ratio of the filler (in particular, the fibrous filler) relative to 100 parts by weight of the crystalline resin is, for example, about 5 to 100 parts by weight, preferably about 10 to 60 parts by weight, and more preferably about 15 to 50 parts by weight (particularly, about 20 to 40 parts by weight). An elastic member containing the filler in too high a ratio has a low impact resistance or durability.

The elastic member for an actuator according to the present invention substantially contains the crystalline resin alone or the crystalline resin and the filler in combination. The total amount of the crystalline resin and the filler in the elastic member is usually not less than 80% by weight (e.g., 80 to 100% by weight), preferably not less than 90% by weight (e.g., 90 to 99% by weight), and more preferably not less than 95% by weight (particularly, not less than 99% by weight). The elastic member may consist of the crystalline resin and the filler.

### (Other additives)

Since the elastic member of the present invention contains the crystalline resin, the mechanical properties or design of the elastic member can easily be improved by addition of a conventional additive for a resin. For example, the additive for a resin may include a coloring agent (a dye or a pigment), a lubricant, a stabilizer (such as an antioxidant, an ultraviolet absorber, a heat stabilizer, or a light stabilizer), an antistatic agent, a flame retardant, a flame-retardant auxiliary, an antiblocking agent, a plasticizer, and a preservative. These additives may be used alone or in combination.

### [Characteristics and production process of elastic member]

The elastic member of the present invention may have a modulus of elasticity in tens ion which can be selected from the range of about 1 to 300 GPa in the tensile test (50 mm/min.) in accordance with ISO 527-1/-2. In order to improve the transmission of vibration or the displacement expansion function, the modulus of elasticity in tension may be, for example, about 1.5 to 100 GPa, preferably about 2 to 50 GPa, and more preferably about 3 to 10 GPa. In a case where the modulus of elasticity in tension is too small, the transmission of vibration or the displacement expansion function is low; in a case where the modulus of elasticity in tension is too high, the elastic member is difficult to mold or shape.

### (Elastic member for ultrasonic motor)

The form (or shape) of the elastic member of the present invention can be selected according to the species of the actuator (inparticular, a piezoelectric actuator) . For example, for an ultrasonic motor, the elastic member may have a two-dimensional form [e.g., a plate-like form (such as a square flat-plate form or a disc form) and a rod-like form] or a three-dimensional form [e.g., a tubular (or hollow cylindrical) or ring form, and a cylindrical form]. For a linear ultrasonic motor, the elastic member may have aplate-like form or a rod-like form (inparticular, a rod-like form). For a rotary ultrasonic motor, the elastic member may have a ring form or a cylindrical form (particularly, a ring form).

Moreover, in order to efficiently drive the non-vibrating body (in particular, a movable body) by the flexural vibration transmitted from the electromechanical transducer (in particular, a piezoelectric element), it is preferred that the ultrasonic motor have a raisedportion (tooth) on an opposite side with respect to a side fixed to the electromechanical transducer (in particular, a piezoelectric element). It is particularly preferred that the ultrasonic motor have a plurality of raised portions (teeth).

For example, the planar form of the raised portion may include a quadrangular form (such as a square form or a rectangular form), a triangular form, a circular form, and an ellipsoidal form. Among these forms, a quadrangular form, such as a rectangular form, is preferred. For example, the cross-sectional form of the raised portion (the cross-sectional form in the thickness direction of the elastic member) may include a quadrangular form (such as a square form or a rectangular form), a triangular form, and a waveform. Among these forms, a quadrangular form (such as a rectangular form) or a triangular form is preferred. In particular, for a linear ultrasonic motor, a preferred cross-sectional form includes a triangular form, particularly, an asymmetric triangular form with respect to the axis parallel to the protruding direction of the raised portion (or the axis perpendicular to the contact surface of the piezoelectric element with the elastic member), or a non-isosceles triangular form. A plurality of the raised portions, each having such a triangular cross-sectional form, may be arranged with separation so that the raised portions may have a saw-tooth form in a cross section thereof. For a rotary ultrasonic motor, a preferred cross-sectional form includes a quadrangular form, in particular, a symmetric quadrangular form (such as a rectangular form or a square form) with respect to the axis parallel to the protruding direction of the raised portion.

In order to drive the movable body by the flexural vibration of the elastic member, the number of the raised portions may be plural. For a linear ultrasonic motor, for example, the number of the raised portions is not less than 2 (e.g., about 2 to 10). For a rotary ultrasonic motor, for example, not less than 10 (e.g., about 10 to 20) of the raised portions may be arranged (or formed) regularly.

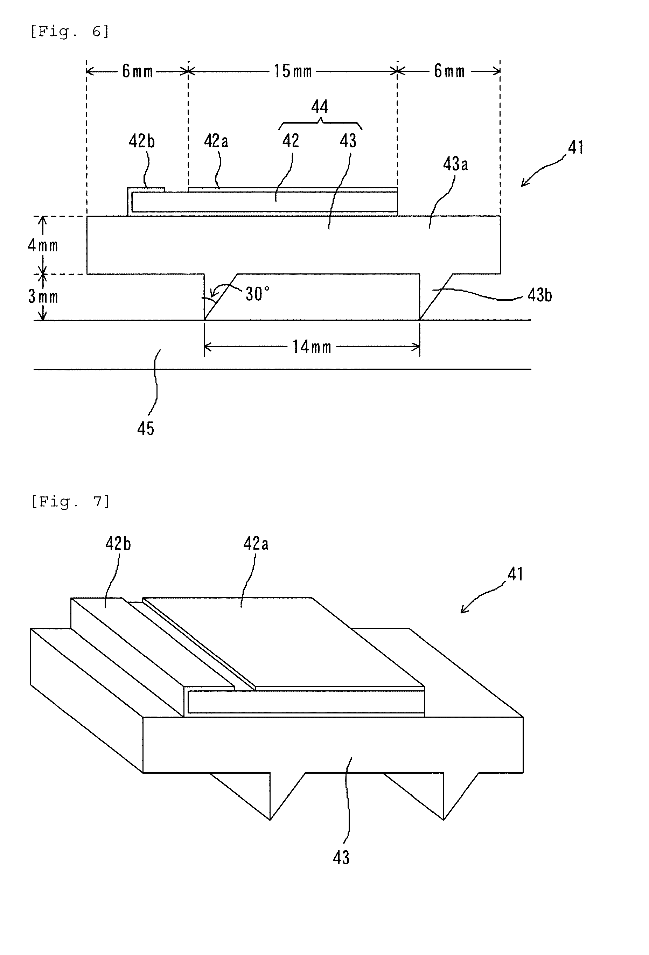

Fig. 6 is a schematic side elevational view of a linear ultrasonic motor in accordance with an embodiment of the present invention. Fig. 7 is a schematic perspective view of a stator of the linear ultrasonic motor shown in Fig. 6. A motor 41 comprises a plate-like elastic member 43, a plate-like piezoelectric element 42, and a plate-like movable body 45. The plate-like elastic member 43 comprises a plate-like base 43a having a rectangular face, and two raised portions (saw-tooth portions) 43b which are formed at the lower portion of the plate-like base and extend toward the width direction with separation, and each of which has a triangular form in a cross section thereof. The plate-like piezoelectric element 42 is partly laminated on the plate-like elastic member 43 in a longitudinal direction thereof. The plate-like movable body 45 is disposed to contact with the tip of the raised portion 43b of the plate-like elastic member and has the same width as that of the plate-like elastic member. Incidentally, a pair of electrodes 42a, 42b for applying a voltage to the piezoelectric element is disposed on the surface of the piezoelectric element 42. The central axis of the vibration portion of the piezoelectric element (the portion in which the pair of electrodes faces each other in the thickness direction of the piezoelectric element) is made to coincide with the central axis of the elastic member 43. For the ultrasonic motor 41, the piezoelectric element 42 and the plate-like elastic member 43 are fixed and make up the stator 44, while the movable body 45 is movably disposed. The ultrasonic vibration generated in the piezoelectric element 42 is converted into a straight motion of the movable body 45 through the plate-like elastic member 43. Specifically, when the piezoelectric element 42 is vibrated in the longitudinal direction by applying an AC voltage, the elastic member, in a contact side with the piezoelectric element, expands and contracts in the longitudinal direction following the vibration of the piezoelectric element, while the elastic member, in the opposite side to the contact side, produces flexural vibration due to reduced expansion and contraction. Thus, a motion scraping (or scratching) in one direction is provided to the raised portions, which are arranged in the opposite side, resulting in putting the movable body into a straight motion in one direction. In particular, the above-mentioned motion is promoted according to the position to be laminated of the piezoelectric element 42, the position to be arranged of the raised portion 43b of the elastic member, the asymmetry of the cross-sectional triangular form of the raised portion (the asymmetry with respect to the central axis of the longitudinal direction of the plate-like elastic member).

The form (or shape) and size of the elastic member is not particularly limited to specific ones and can be selected according to the difference of frequency or species. For example, the elastic member may be prepared in the ranges as shown below.

For the linear ultrasonic motor as shown in Fig. 6, the elastic member may have 2 or more (e.g., about 2 to 5 , preferably about 2 to 3 , and more preferably 2) raised portions extending toward the width direction, in which each raised portion is arranged with separation (or at intervals) and has a triangular cross section. The raised portion, each having a triangular cross-sectional form, may have a saw-tooth form in a cross section thereof. Each one of the raised portions (e.g. , the saw-tooth form) has a height of about 0.5 to 10 mm, preferably about 1 to 8 mm, and more preferably about 2 to 5 mm. The height of the raised portion can be selected according to the frequency. The height of the raised portion is about 0.1 to 1.5 times, preferably about 0.2 to 1.0 times, and more preferably about 0.3 to 0.8 times as large as the thickness of the elastic member.

The elastic member has a thickness of, for example, about 1 to 40 mm, preferably about 2 to 30 mm, and more preferably about 3 to 20 mm. The thickness of the elastic member is, for example, about 1 to 10 times, preferably about 1.5 to 8 times, and more preferably about 2 to 5 times as large as that of the piezoelectric element.

Preferably, the electromechanical transducer (in particular, a piezoelectric element) is fixed to at least part of the plate-like elastic member. For example, the length of the elastic member in the longitudinal direction may be about 1.5 to 2.5 times (particularly about 1.8 to 2.2 times) as large as the length of the electromechanical transducer (the length of the vibration portion). The elastic member may have a length of, for example, about 9 to 200 mm (particularly about 15 to 100 mm) in the longitudinal direction. The vibration portion of the electromechanical transducer may have a length of, for example, about 5 to 100 mm (particularly about 10 to 50 mm).

For example, the thickness of the elastic member may be about 0.05 to 0.4 times (particularly about 0.1 to 0.3 times) as large as the length of the elastic member in the longitudinal direction. The elastic member may have a thickness of, for example, about 1 to 40 mm (particularly about 3 to 20 mm) .

Moreover, in light of the transmission of flexural vibration, it is preferred that the central axis of the elastic member be substantially made to coincide with the central axis of the vibration portion of the electromechanical transducer.

For a rotary ultrasonic motor provided with a ring elastic member, the elastic member does not necessarily have a raised portion for contacting with a non-vibrating body to transmit the flexural vibration of the elastic member to the non-vibrating body. The elastic member free from the raised portion has the transmission of vibration. The formation of the raisedportion allows the transmission of vibration to be improved. For the rotary ultrasonic motor, the elastic member may have fine raised portions regularly arranged along a circumferential direction of the ring (or comb-tooth portions). In the comb-tooth portions, in a case where the planer form of each raised portion (comb tooth) is a quadrangular form (such as a rectangular form) and there is a slit (a slit portion) between the raised portions, each one of the raisedportions may have a width of, for example, about 0.1 to 30 mm, preferably about 0.2 to 15 mm, and more preferably about 0.5 to 10 mm (particularly about 0.5 to 5 mm) or may have a height of, for example, about 0.1 to 30 mm, preferably about 0.2 to 15 mm (e.g., about 0.5 to 10 mm), and more preferably about 0.5 to 5 mm (particularly about 0.5 to 3 mm). The slit may have a depth of, for example, about 0.1 to 30 mm, preferably about 0.2 to 15 mm (e.g., about 0.5 to 10 mm), and more preferably about 0.5 to 5 mm (particularly about 0.5 to 3 mm). The width ratio of the raised portion relative to the slit portion (the width of the raised portion/the width of the slit portion) is, for example, about 0.01 to 100, preferably about 0.1 to 10, and more preferably about 0.3 to 30.

The elastic member of the present invention can be produced by a conventional molding method according to the species and form of the ultrasonic motor. Examples of the conventional molding method may include extrusion molding, injection molding, and compression molding. Among these moldingmethods , extrusion molding or injection molding is widely used. An elastic member having a three-dimensional form, such as a saw-tooth form or a comb-tooth form, can usually be formed by injection molding or cutting (or machinery cutting). According to the present invention, the elastic member, which contains a resin, has an excellent moldability (or processability).

In a case where the elastic member (in particular, an elastic member of a linear ultrasonic motor) contains the filler, the raised portion of the elastic member may be free from the filler. For example, for the elastic member of a linear ultrasonic motor, the elastic member may be formed without integral molding. In other words, a raised portion free from the filler may separately be formed by extrusion molding or injection molding and then bonded to the plate-like base of the elastic member.

In particular, in terms of simplicity and convenience, the extrusion molding or the injection molding is preferably used as a method for orienting the fibrous filler toward a specific direction (particularly, a direction parallel to the vibration direction of the piezoelectric element). The extrusion molding or the injection molding easily makes it possible to orient the fibrous filler toward the flow direction of the resin. The method for orienting the fibrous filler toward a specific direction can suitably be selected according to the species of the resin, and is not particularly limited to a specif ic one. For example, for the extrusion molding, the resin composition to be subjected to melt-kneading may be pre-dried at 80 to 180°C (particularly 100 to 160°C) for a prescribed time (e.g., about 2 to 5 hours) and melt-kneaded at 220 to 420°C (particularly 320 to 400°C). For the injection molding, the cylinder temperature may be about 220 to 420°C (particularly about 320 to 400°C), and the mold temperature may be about 40 to 250°C (particularly about 100 to 220°C). Thus, preferably, the elastic member for the linear ultrasonic motor is obtained by producing a base containing the fibrous filler oriented toward the flow direction of the resin by the extrusion molding or the injection molding, and then bonding a separately prepared raised portion to the base.

### (Displacement expansion element)

In a case where the elastic member of the present invention is a displacement expansion element for a displacement-expanding actuator, the form of the displacement expansion element is in a plate-like form having a raised portion for forming (capable of forming) a space between the displacement expansion element and an electromechanical piezoelectric element fixed thereto. Since the displacement expansion element has such a raised portion, a space can be formed between the displacement expansion element and an electromechanical piezoelectric element fixed thereto, so that the displacement of the raised portion due to expansion and contraction of the electromechanical transducer can be expanded.

The size of the raised portion can be selected according to the species of the displacement-expanding actuator. Preferably, the raised portion has a height so that the space may have a height (maximum height) of, for example, about 0.1 to 10 mm, preferably about 0.2 to 5 mm, and more preferably about 0.3 to 3 mm (particularly about 0.5 to 2 mm).

The form (or shape) of the raised portion is not particularly limited to a specific one as far as there is a space between the displacement expansion element and the electromechanical piezoelectric element. The raised portion may be formed for forming a space closed between the displacement expansion element and the electromechanical piezoelectric element. As the raised portion shown in Fig. 3, the raised portion may be formed for forming a space that is not closed between the displacement expansion element and the electromechanical piezoelectric element.

The raised portion for forming the space closed between the displacement expansion element and the electromechanical piezoelectric element may be formed by partly projecting (or bending or curving) the displacement expansion element. The form of the raised portion may include, for example, a hemispherical form, a conical form, a truncated conical form, a pyramidal from (such as a triangular pyramidal form or a quadrangular pyramidal form), a truncated pyramidal from, a cylindrical form, and a prismatic form. Specifically, for example, the form of the raised portion may be the form described in Japanese Patent Application Laid-Open Publication No. 2012-34019.

Among these raised portions, a preferred one includes a ridge (or a mountain-range-form raised portion) having both open ends thereof, that is, a ridge raised extending toward one direction with flection or curvature, because of the following: the displacement expansion element having such a raised portion (ridge) has a high displacement expansion function, allows simple or easy production of an actuator provided with the element integrated with the electromechanical transducer by injection molding, and is easy to process and efficiently produce.

The ridge has a bent (or crooked) form or a curved form in a cross section perpendicular to a ridge direction (ridgeline direction) thereof. For example, the bent form may include a triangular form, a square form, a rectangular form, and a trapezoidal form. For example, the curved form may include a substantially semicircular form and a waveform. Among them, in respect of a high displacement expansion function, a preferred one includes a trapezoidal form (in particular, a trapezoidal form tapered (or narrowed) from the side contacting with the electromechanical transducer toward the non-contacting side). The actuator having a raised portion with a trapezoidal form in a cross section thereof is known as a cymbal actuator.

Preferably, the ridge has a height so that the space may have a height (maximum height) of, for example, about 0.1 to 5 mm, preferably about 0.3 to 3 mm (e.g., about 0.4 to 2 mm), and more preferably about 0.5 to 1.5 mm (particularly about 0.8 to 1.2 mm). The ridge has a width (a width in the direction perpendicular to the ridgeline direction) so that the space may have a width (maximum width) of, for example, about 1 to 30 mm, preferably about 2 to 20 mm, and more preferably about 3 to 15 mm (particularly about 5 to 10 mm). For example, the width of the space is about 0.1 to 0.9 times, preferably about 0.2 to 0.8 times, and more preferably about 0.3 to 0.7 times as large as the length (the length in the direction perpendicular to the ridgeline direction) of the electromechanical transducer (particularly a piezoelectric element). The ridge has a length in the ridgeline direction of , for example, about 1 to 100 mm, preferably about 2 to 30 mm, and preferably about 3 to 20 mm (particularly about 5 to 15 mm).

For the ridge having a cross-sectional trapezoidal form, the trapezoidal form has a base angle of, for example, about 50 to 80°, preferably about 10 to 70°, and more preferably about 20 to 60° (particularly about 30 to 50°). In a case where the base angle is too large, the raised portion has a small amplitude in vertical motion, which makes the displacement expansion function low. In a case where the base angle is too small, the raised portion is difficult to deform, whichmakes the displacement expansion function low.

The site at which the raised portion (particularly the ridge) is formed is not particularly limited to a specific one. The raised portion is usually formed at a substantially central site (for the ridge, at a substantially central site in the direction perpendicular to the ridgeline direction).

The planer form of the displacement expansion element may include a quadrangular form (such as a square form or a rectangular form), a triangular form, a circular form, an ellipsoidal form, and others. Among these forms, a quadrangular form (such as a rectangular form) is preferred.

The displacement expansion element has a thickness of, for example, about 0.3 to 5 mm, preferably about 0.5 to 3 mm, and more preferably about 0.6 to 2 mm (particularly about 0.8 to 1.5 mm). For example, the thickness of the displacement expansion element is about 0.1 to 10 times, preferably about 0.3 to 5 times, and more preferably about 0.3 to 3 times (particularly about 0.5 to 2 times) as large as that of the electromechanical transducer.

In a case where the displacement expansion element is used as a driving mechanism for scraping out a contacting non-vibrating body (a movable body), the displacement expansion element may have a projection. The projection is disposed on the raised portion of the displacement expansion element. For example, in a case where the cross section of the raised portion has a trapezoidal form, the projection may be disposed on the side face of the raised portion as shown in Fig. 4.

The projection may have a form (or shape) including a prismatic form (such as a triangular prismatic form or a quadrangular prismatic form), a substantially semicylindrical form, or a pyramidal form (such as a triangular pyramidal form or a quadrangular pyramidal form). Among them, aprismaticform (such as a triangular prismatic form) is preferred.

The projection may have a cross-sectional form (in a case where the raised portion has a ridge form, a form in a cross section perpendicular to the ridgeline direction) of, for example, a quadrangular form (such as a square form or a rectangular form), a triangular form, and a waveform. Among these forms, a polygonal form (such as a triangular form) is preferred.

The number of the projections can be selected according to the species of the actuator. The number of the projections may be one or may be not less than two.

The height of the projection is usually one or more times, for example, about 1. 2 to 10 times, preferably about 1.5 to 8 times, and more preferably 2 to 5 times as large as that of the raised portion.

The displacement expansion element of the present invention can be produced by a conventional molding method according to the species and form of the displacement-expanding piezoelectric actuator. Examples of the conventional molding method may include extrusion molding, injection molding, and compression molding. Among these molding methods, extrusion molding or injection molding is widely used. A three-dimensional form, such as a saw-tooth form or a comb-tooth form, can usually be formed by injection molding or cutting. According to the present invention, the elastic member, which contains a resin, has an excellent moldability (or processability).

In a case where the displacement expansion element contains the filler and has the projection, the projection may be free from the filler. For example, for the element having a ridge with a trapezoidal form in a cross section thereof, the projection may be formed without integral molding. In other words, a projection free from the filler may separately be formed by extrusion molding or injection molding and then bonded to the side face of the ridge.

In a case where the fibrous filler is contained, as a method for orienting the fibrous filler toward a specific direction, there may be used a method the same as those exemplified in the paragraph of the elastic member for an ultrasonic motor. Preferably, the displacement expansion element having the projection is obtained by producing a base containing the fibrous filler oriented toward the flow direction of the resin by extrusion molding or injection molding, and then bonding a separately prepared projection to the base.

### (Elastic member for Langevin transducer)

In a case where the elastic member of the present invention is an elastic member for a Langevin transducer, the elastic member forms a resonance member. The resonance member may have a form of a front member (or front mass) or rear member (or rear mass) as a resonance member for a conventional Langevin transducer.

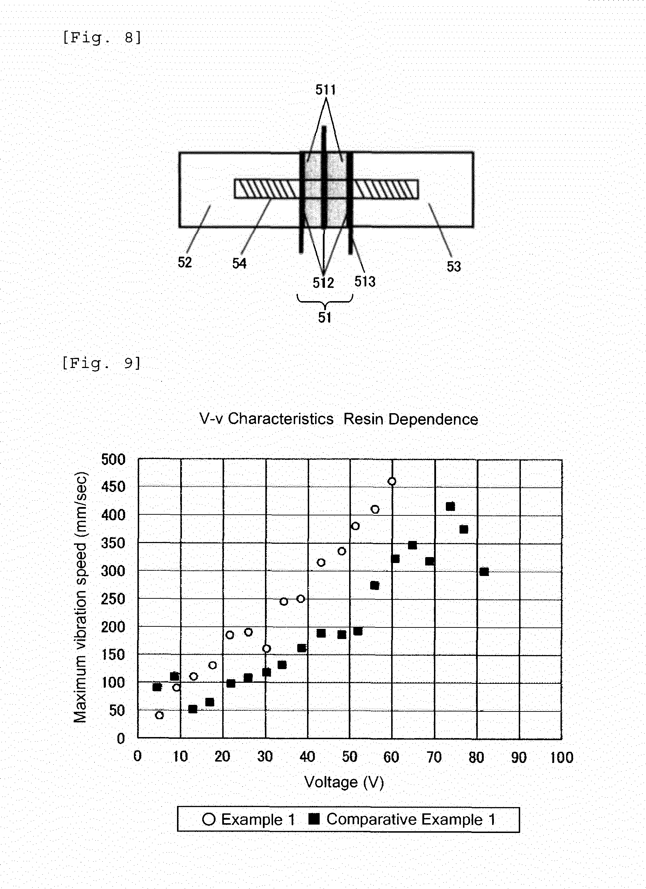

The Langevin transducer (ultrasonic transducer) shown in Fig. 8 is what is called a bolt-clamped Langevin transducer. The Langevin transducer is useful as a device for generating and detecting ultrasonic waves in a medium (such as water or air). This Langevin transducer comprises a piezoelectric element 51 and a pair of resonance members 52, 53 that hold (sandwich) the piezoelectric element. Specifically, the Langevin transducer comprises the piezoelectric element 51, the first resonance member (front member or front mass) 52 that is fixed to a first side of the piezoelectric element and has an ultrasonic transmission/reception portion, and the second resonance member (rear member or rear mass) 53 that is fixed to a second side of the piezoelectric element and is a member for allowing the first resonance member 52 to press-contact with the piezoelectric element (or for pressing and bonding the first resonance member 52 to the piezoelectric element). Moreover, in order to prevent the decay of ultrasonic waves in the interface or improve the vibration durability, the piezoelectric element 51 is joined to the pair of resonance members 52, 53 with a joining means (such as a screw or an axial bolt) 54.

In the Langevin transducer, the thermoplastic resin and the filler contained in the front member 52 allow the surface of the front member 52 to vibrate at a high speed even in application of a low electric current (or a low voltage).

The piezoelectric element 51 practically has a piezoelectric layer and an electrode plate in order that an AC voltage from an oscillator may be applied to the piezoelectric element. The piezoelectric layer and the electrode plate are usually laminated alternately to form a laminate. The number of the piezoelectric layers laminated and the number of the electrode plates laminated are not particularly limited. These numbers are the same or different from each other, for example, about 1 to 10, preferably about 1 to 8, more preferably about 1 to 6 (e. g. , about 1 to 4).

In an embodiment shown in Fig. 8, a thin circular electrode plate 512 and a disc piezoelectric layer 511 each have a through hole in a central part of a diameter direction thereof. A screw (screw rod) 54 is passed through the plate and the layer alternately in this order to form a five-layer laminate composed of three electrode plates 512 and two piezoelectric layers 511, wherein each piezoelectric layer is interposed between two electrode plates. The three electrode plates 512 each have a lug portion 513. The electrode plates are connected to an oscillator (and if necessary, an amplifier) through lead wires attached to these lug portions, and thus an AC voltage can be applied to the piezoelectric layers 511.

The front member (or front plate) 52 has a high adhesion to the piezoelectric element 51, can propagate (or travel) the vibration of the piezoelectric element 51 to a tip thereof without attenuation, and can emit (or radiate) strong ultrasonic waves toward a medium. In this embodiment, the front member 52 is in a cylindrical form and has a hole on a contact surface with the piezoelectric element 51; the hole has a female screw portion corresponding to a male screw portion of the joining means 54. The screw 54 passed through the piezoelectric element 51 is screwed into (or screwed on) the hole to improve the adhesion of the front member 52 to the piezoelectric element 51 and try to improve the durability of the piezoelectric element 51.

The form of the front member 52 may include, but should not be limited to, for example, a cylindrical form, a truncated conical form, a prismatic form, a truncated pyramidal from, a hemispherical form. The form of the front member 52 may be a combination of these forms (e.g., a cylindrical form of which a top is in a truncated conical form).

The hole on the contact surface with the piezoelectric element 51 is not necessarily needed. For joining with the joining means (such as a screw), the front member 52 may have a hole (a screw hole) on the contact surface. The hole has a size capable of receiving a joining member (such as a screw). When the length of the front member 52 in a diameter direction thereof is taken as 100, the hole has a diameter (a hole diameter) of, for example, about 1 to 60, preferably about 5 to 50, and more preferably about 10 to 40. When the thickness of the front member 52 is taken as 100, the hole has a depth of, for example, about 1 to 70, preferably about 5 to 60, and more preferably about 10 to 50.

According to the present invention, the rear member 53 may be formed from the elastic member of the present invention. In order to vibrate the surface of the front member 52 at a high speed in application of a low electric current, it is preferred that the front member 52 be formed from the elastic member of the present invention (the elastic member containing the thermoplastic resin and the filler).

The thickness of the front member 52 (the length in the axial direction) can suitably be selected according to the resonant wavelength. For example, the front member 52 has the thickness of about not more than 100 mm, preferably about 10 to 70 mm, and more preferably about 20 to 60 mm (e.g., about 30 to 50 mm). According to the present invention, since the resonant wavelength can be shortened, due to a smaller thickness of the front member 52, the Langevin transducer can be downsized. Moreover, the front member 52 has a length in a diameter direction thereof of, for example, about 1 to 50 mm, preferably about 5 to 40 mm, and more preferably about 10 to 30 mm.

The acoustic impedance of the front member 52 can be selected from the range of about 1 to 10 N·s/m³ at a room temperature (a temperature of about 15 to 25°C) in accordance with JIS A1405, and is, for example, about 3 to 9 N·s/m³, preferably about 4 to 8 N·s/m³, and more preferably about 5 to 7 N·s/m³. According to the present invention, since there is a small difference in acoustic impedance between the front member 52 and a medium (such as water or a living body), ultrasonic waves can be transmitted and received at a high efficiency without reflection of the ultrasonic waves at the interface. Furthermore, an acoustic matching layer is unnecessary, and the device can be downsized.

The rear member (or backing plate) 53 allows the front member 52 to be in press-contact with the piezoelectric element 51 by holding (sandwiching) the piezoelectric element 51 between the rear member 53 and the front member 52. In this embodiment, the rear member 53 has the same form and size as those of the front member 52. The form and size of the rear member 53 are not limited to those shown in Fig. 8. As well as the front member 52, the rear member 53 can be design-changed to various forms and sizes.

The thickness ratio of the front member 52 relative to the rear member 53 is not particularly limited to a specific one, and the former/the latter can be selected from the range of about 1/3 to 3/1. In order to emit ultrasonic waves forward, the thickness ratio is, for example, about 1/1 to 3/1, preferably about 1.2/1 to 2.8/1, and more preferably about 1.5/1 to 2.5/1.

A main material for the rear member 53 may include a resin, a metal [e.g., a light metal (such as aluminum, magnesium, beryllium, or titanium) and a heavy metal (such as stainless steel)], and a ceramics. Among these main materials, the resin is preferred. The resin may be a thermosetting resin. The resin is usually a thermoplastic resin. For example, the thermoplastic resin may include not only the same resin as that for the front member 12 but also a (meth) acrylic resin, a polyolefinic resin (such as a polyethylene-series resin or a polypropylene-series resin), a polyester-series resin [e.g., a poly(C₂₋₄alkylene C₆₋₁₀arylate), such as a poly(ethylene terephthalate) or a poly(ethylene naphthalate)], a polycarbonate resin, a polyamide-series resin, and a polyurethane-series resin.

As well as the front member 52, the main material for the rear member 53 preferably includes a poly (phenylene sulfide)-series resin, a poly(aryl ketone) resin, particularly, a poly(phenylene sulfide)-series resin. The resin for the rear member 53 may be the same species as the resin for the front member 52 or may be different in species from the resin for the front member 52. In particular, it is preferred that these resins be the same species.

As well as the front member 52, the resin for the rear member 53 may be used in combination with a filler and/or other additives. The filler and other additives may include those exemplified in the paragraph of the elastic member for an actuator. The same applies to preferred components.

If necessary, the rear member 53 may have any layer (such as a buffer layer or a protective layer) laminated on an opposite side (or surface) with respect to the side contacting with the piezoelectric element 51.

### [Actuator]

The actuator of the present invention comprises a plate-like electromechanical transducer expandable and contractible in a surface direction thereof in response to application of an AC voltage, and the above-mentioned elastic member fixed to the electromechanical transducer.

The electromechanical transducer may be an electrostrictive element (or a magnetostrictive element). In light of the excellent transmission of vibration or the displacement expansion function, the piezoelectric element is preferred. The piezoelectric element may be a laminated piezoelectric element in order to further improve the displacement expansion function.

The piezoelectric element is not particularly limited to a specific one as far as the element can generate ultrasonic vibration. The piezoelectric element may be a piezoelectric polymer membrane (e.g., a fluororesin, such as a poly(vinylidene fluoride) or a vinylidene fluoride-ethylene trifluoride copolymer) or a piezoelectric metal thin film (e. g. , a deposited zinc oxide film). The piezoelectric element is usually a piezoelectric ceramics layer. The piezoelectric ceramics layer contains a ceramics having a piezoelectric property, for example, an ABO₃-type perovskite oxide, such as lead zirconate titanate (PZT), lead lanthanum zirconate titanate, lead titanate, or barium titanate. These ceramics may be used alone or in combination.

The piezoelectric layer 511 may be a piezoelectric polymer membrane (e.g., a fluororesin, such as a poly(vinylidene fluoride), or a vinylidene fluoride-ethylene trifluoride copolymer) or a piezoelectric metal thin film (e.g., a deposited zinc oxide film). The piezoelectric element is usually a piezoelectric ceramics layer.

The actuator of the present invention is usually a piezoelectric actuator. For example, the actuator may be an ultrasonic motor, a displacement-expanding piezoelectric actuator, and a Langevin transducer.

### (Ultrasonic motor)

The ultrasonic motor of the present invention is in contact with a non-vibrating body in use, and the elastic member generates flexural vibration (elliptic motion) by the vibration of the electromechanical transducer (particularly, a piezoelectric element) to drive the elastic member (actuator) itself or the non-vibrating body. The piezoelectric actuator in which the elastic member generates flexural vibration may include an ultrasonic motor, such as a rotary ultrasonic motor or a linear ultrasonic motor. Among them, a piezoelectric actuator that drives the non-vibrating body as a movable body (in particular, an ultrasonic motor, such as a rotary ultrasonic motor or a linear ultrasonic motor) is widely used.

For the ultrasonic motor, a conventional non-vibrating body, a plate-like or rod-like movable body (slider), and a rotor can be used as the non-vibrating body (movable body) according to the species of the ultrasonic motor. Preferably, the non-vibrating body includes a plate-like movable body usable for a linear ultrasonic motor, and a rotor usable for a rotary ultrasonic motor. The material for the non-vibrating body (movable body) is not particularly limited to a specific one. The non-vibrating body can be formed from a conventional metallic material or a resin, usually a metal, such as stainless steel, aluminum, or brass. In order to improve the slidability to the elastic member, the non-vibrating body (movable body) may have a surface coated with a silicone or a fluororesin.

The method for fixing the elastic member and the electromechanical transducer (in particular, a piezoelectric element) may include fixing of a cut elastic member and an electromechanical transducer with an adhesive; melting a resin on a surface of a cut elastic member to adhere to an electromechanical transducer; placing an electromechanical transducer in a die and then pouring a molten resin into the die to seal the electromechanical transducer (insert molding) ; and other methods.

### (Displacement-expanding actuator)

The displacement-expanding piezoelectric actuator of the present invention is provided with a displacement expansion mechanism for amplifying an expansion and contraction displacement of a plate-like electromechanical transducer which expands and contracts in a surface direction thereof in response to application of an AC voltage. The actuator comprises the electromechanical transducer and the displacement expansion element fixed to the electromechanical transducer. The displacement expansion element is usually in contact with a non-vibrating body in use and amplifies an expansion and contraction displacement of the electromechanical transducer to drive the displacement expansion element itself or the non-vibrating body.

The plate surface (plane surface) of the displacement expansion element and the plate-like electromechanical transducer (in particular, a piezoelectric element) are fixed so that space can be left inside of the raised portion. The method for fixing the displacement expansion element and the electromechanical transducer may include, for example, fixing of a cut displacement expansion element and an electromechanical transducer with an adhesive; melting a resin on a surface of a cut displacement expansion element to adhere to an electromechanical transducer; and placing an electromechanical transducer in a die and then pouring a molten resin into the die to seal the electromechanical transducer (insert molding).

The displacement expansion element may be fixed to one side or each side of the plate-like electromechanical transducer.

In a case where the displacement expansion element has a raised portion for forming a space closed between the displacement expansion element and the electromechanical piezoelectric element, the size of the electromechanical transducer is not particularly limited to a specific one as far as the space closed can be formed. In particular, in a case where the displacement expansion element is fixed to one side of the plate-like electromechanical transducer, it is preferred that the size of the electromechanical transducer be smaller than that of the displacement expansion element; for example, the diameter of the electromechanical transducer may be about 0.3 to 0.7 times (particularly about 0.4 to 0.6 times) as large as that of the displacement expansion element. In a case where the displacement expansion element is fixed to each side of the plate-like electromechanical transducer, it is preferred that the size of the electromechanical transducer be substantially the same as or larger than that of the displacement expansion element; for example, the diameter of the electromechanical transducer may be about 0.9 to 1.5 times (particularly about 1 to 1.2 times) as large as that of the displacement expansion element.

In a case where the displacement expansion element has a ridge, the size of the electromechanical transducer is not particularly limited to a specific one as far as the transducer can stride over the opening of the ridge to form a space. In the ridgeline direction, the length of the electromechanical transducer is about 0.5 to 1.5 times (particularly about 0.8 to 1.2 times) as large as that of the displacement expansion element, and usually, is substantially the same as that of the displacement expansion element. In a case where the displacement expansion element is fixed to one side of the plate-like electromechanical transducer, in the direction perpendicular to the ridgeline direction, it is preferred that the length of the electromechanical transducer be shorter than that of the displacement expansion element; for example, the length of the electromechanical transducer may be about 0.3 to 0.7 times (particular about 0.4 to 0.6 times) as large as that of the displacement expansion element. In a case where the displacement expansion element is fixed to each side of the plate-like electromechanical transducer, in the direction perpendicular to the ridgeline direction, it is preferred that the length of the electromechanical transducer be substantially the same as or longer than that of displacement expansion element; for example, the length of the electromechanical transducer may be about 0.9 to 1.5 times (particularly about 1 to 1.2 times) as large as that of the displacement expansion element.

For the displacement expansion element having a ridge, the displacement expansion element has a length in the direction perpendicular to the ridgeline direction of, for example, about 5 to 300 mm, preferably about 10 to 100 mm, and more preferably about 20 to 50 mm (in particular, about 25 to 40 mm). The electromechanical transducer may have a length in the direction perpendicular to the ridgeline direction of, for example, about 5 to 100 mm, preferably about 10 to 50 mm, and more preferably about 10 to 30 mm.

As the non-vibrating body (movable body), a conventional non-vibrating body can be used according to the species of the actuator. Examples of the conventional non-vibrating body may include a plate-like or rod-like movable body (slider) for a linear motor, and a rotor. The material for the non-vibrating body (movable body) is not particularly limited to a specific one. The non-vibrating body can be formed from a conventional metallic material or a resin, usually a metal, such as stainless steel, aluminum, or brass.

In consideration of the transmission of vibration, it is preferred that the central axis of the displacement expansion element be substantially made to coincide with the central axis of the vibration portion of the electromechanical transducer.

### (Langevin transducer)

The Langevin transducer of the present invention is an actuator in which a vibration frequency of expansion and contraction of an electromechanical transducer is reduced by resonance members holding (or sandwiching) the electromechanical transducer. The actuator may be a conventional Langevin transducer except the resonance members.

In the Langevin transducer shown in Fig. 8, the form of the piezoelectric layer 511 containing the piezoelectric element is not particularly limited to a specific one. For example, the form of the piezoelectric layer 511 may be a cylindrical form, a truncated conical form, a prismatic form, and a truncated pyramidal from, or may be a combination of these forms (e.g., a form having a cylinder and a truncated cone joined in series).

The piezoelectric layer 511 may have a thickness suitably selectable according to an oscillation frequency, and may have, for example, about 500 µm to 10 mm, preferably about 1 to 7 mm, and more preferably about 2 to 5 mm.

The form of the electrode plate 512 is not particularly limited to a specific one as far as the electrode plate 512 is thin. The form may be a polygonal from (such as a rectangular form), a circular form, an elliptical form, and others. The electrode plate 512 does not necessarily have a lug portion. In order to attach a lead wire easily, the electrode plate 112 may have a lug portion (such as an extending portion or a turnup portion) at an end (or a periphery) thereof. The electrode plate 512 has a thickness of, for example, about 10 to 500 µm, preferably about 30 to 300 µm, and more preferably about 50 to 150 µm.

The electrode plate 512 is formed from a conductive material. For example, the conductive material may include a metal, e.g., gold, silver, copper, platinum, and aluminum. These conductive materials maybe used alone or in combination.

For example, in a case where the resonance members are bonded to the piezoelectric element 51 with an adhesive, the piezoelectric element 51 (the piezoelectric layer 511 and/or the electrode plate 512) does not always have a hole. In a case where the resonance members and the piezoelectric element 51 are pressed with a joining means (such as a screw (or an axial bolt)) to contact with each other, the piezoelectric element 51 (the piezoelectric layer 511 and/or the electrode plate 512) may have a hole. The piezoelectric element 51 may have a hole on each of a surface contacting with the front member 52 and a surface contacting with the rear member 53. These holes may be linked together to form a through hole passing through the piezoelectric element 51. The hole may have a size capable of inserting the joining member (such as a screw) .

The resonance frequency of the Langevin transducer of the present invention can suitably be selected according to the usage. For example, the resonance frequency may be about 10 to 1000 kHz, preferably about 15 to 900 kHz, and more preferably about 20 to 800 kHz. The ultrasonic transducer may be used at at least one frequency selected from the group consisting of 26, 38, 78, 100, 130, 160, 200, 430, 750, and 950 kHz. According to the present invention, the Langevin transducer can be downsized even in a case where the Langevin transducer is used at a low frequency.

The electric current to be applied to the Langevin transducer is, for example, about 30 to 250 mA, preferably about 50 to 220 mA, and more preferably about 70 to 210 mA (e.g. , about 80 to 200 mA). According to the present invention, the Langevin transducer can vibrate a surface thereof at a high speed even in an application of a low electric current and transmit and receive ultrasonic waves at a high efficiency.

### EXAMPLES

Hereinafter, the following examples are intended to describe this invention in further detail and should by no means be interpreted as defining the scope of the invention. Abbreviated names for materials used in Examples and Comparative Examples are shown below.

### [Abbreviated name of material]

PEEK: polyetheretherketone, "Natural Color (Unfilled)" manufactured by Nihon Extron Co., Ltd., a rod-like molded product having a circular cross section, specific gravity: 1.45, Tg: 143°C
PC1: bisphenol A-based polycarbonate, "PC (Rod)" manufactured by Shibakeisozai Co., Ltd., a rod-like molded product having a circular cross section, specific gravity: 1.2, Tg: 160°C
PC2: polycarbonate, "Polycarbonate Rod" manufactured by Shiraishi Kogyo K.K.
PPS: poly(phenylene sulfide), "Rod PPS N" manufactured by Nihon Extron Co. , Ltd., specific gravity: 1.34, glass transition temperature (Tg): 90°C
PMMA: poly (methyl methacrylate), "Acrylic Cast Rod (Clear)" manufactured by Shiraishi Kogyo K.K.
CF-containing PPS: poly(phenylene sulfide) containing 30% by weight of a carbon fiber with an average fiber diameter of about 7 µm, "PPS/CF: Black" manufactured by Nihon Extron Co., Ltd. , a rod-like molded product that contains the carbon fiber oriented toward a longitudinal direction thereof by extrusion molding and has a circular cross section, specific gravity: 1.45, Tg: 90°C
CF-containing PEEK: polyetheretherketone containing 30% by weight of a carbon fiber with an average fiber diameter of about 7 µm, "PEEK/CF: Black" manufactured by Nihon Extron Co. , Ltd. , a rod-like molded product that contains the carbon fiber oriented toward a longitudinal direction thereof by extrusion molding and has a circular cross section, glass transition temperature (Tg): 143°C
GF-containing PA: nylon MXD6 containing 50% by weight of a glass fiber, "MXD-6: Black [Reny (registered trademark)]" manufactured by Nihon Extron Co., Ltd., a rod-like molded product that contains the glass fiber oriented toward a longitudinal direction thereof by extrusion molding and has a circular cross section, specific gravity: 1.65, Tg: 75°C
GF-containing PC: bisphenol A-based polycarbonate containing 20% by weight of a glass fiber, "PC Rod GF-20 (Black) " manufactured by Shiraishi Kogyo K.K., a rod-like molded product that contains the glass fiber oriented toward a longitudinal direction thereof by extrusion molding and has a circular cross section, specific gravity: 1.41, Tg: 160°C
GF-containing PES: polyethersulfone containing 30% by weight of a glass fiber, "Polyethersulfone Rod GF-30" manufactured by Shiraishi Kogyo K.K., a rod-like molded product that contains the glass fiber oriented toward a longitudinal direction thereof by extrusion molding and has a circular cross section, specific gravity: 1.6, Tg: 217°C
ABS: ABS resin, "ABS Rod Natural" manufactured by Shiraishi Kogyo K.K., a rod-like molded product having a circular cross section, specific gravity: 1.05, Tg: 100°C
PE: polyethylene, "PE Rod" manufactured by Shibakeisozai Co. , Ltd. , a rod-like molded product having acircularcrosssection, specificgravity: 0.91, Tg: -125°C
Glass epoxy: epoxy resin containing about 40% by weight of a glass fiber with an average fiber diameter of 10 µm, "Epoxy Glass (Glass-Epoxy) Rod" manufactured by Murakami Dengyo K.K.
Aluminum: Alloy Standard Number A5052
PZT: "C-216" manufactured by Fuji Ceramics Corporation

Ultrasonic motors, displacement-expanding actuators, and Langevin transducers were produced from these materials, and the following experiments were conducted.

### (A) Experiments on ultrasonic motor

### [Maximum vibration speed]

An elastic member having the same form as that of the elastic member 43 shown in Fig. 6 was produced. The resulting elastic member and a piezoelectric element (a piezoelectric vibrator) made of PZT were pasted together with an adhesive ("Araldite standard" manufactured by Huntsman Japan KK) to give a stator. The vibration speed of the stator was evaluated by a laser Doppler velocimeter ("AT500-05" manufactured by Graphtec Corporation). Specifically, at resonance frequency, AC voltage was applied to the piezoelectric vibrator to vibrate the vibrator in a longitudinal direction thereof. Then, the upper portion of the elastic member made of a resin expanded and contracted, while the lower portion having legs (raised portions) did not expand and contract; thus the flexural vibration of the stator succeeded. The flexural vibration was transmitted to the legs, and the legs caught (or scratched) the ground (non-vibrating body), so that the linear motor moved forward. The vibration speed was evaluated by the above-mentioned laser Doppler velocimeter, and the relation between the maximum vibration speed (vibration speed: mm/sec.) in the tip of the resin at the resonance condition (the middle of a tip of a saw-tooth portion located under the piezoelectric element out of saw-tooth portions 43b) and the voltage was determined.

Incidentally, the AC voltage was generated by a function generator ("WAVE FACTORY 1946" manufactured by NF Corporation) and increased by an amplifier ("HSA4101T" manufactured by NF Corporation), and the motor was driven at the resonance frequency. The voltage applied and the frequency were adjusted so as to cause the maximum vibration according to the materials and forms of the elastic member.

### [Rotation test]

A rotary ultrasonic motor as depicted in Figs. 1 and 2 and a rotary ultrasonic motor in which comb-tooth portions (or comb teeth) were not formed in Figs. 1 and 2 were evaluated for rotation characteristics. A mark was put on the rotor. The rotor was rotated, and the number of rotations of the mark per unit time was used as an index of the rotation characteristics. The elastic member and the piezoelectric element were pasted together with an adhesive ("Araldite standard" manufactured by Huntsman Japan KK).

A segmented electrode was made by dividing an electrode into eightsegments. An alternating voltage was applied to the segmented electrode so as to give a voltage phase lag of 90° between adjacent segments in order. Specifically, sine wave signal or pulse wave signal generated by a function generator ("WAVE FACTORY 1946" manufactured by NF Corporation) was increased by an amplifier ("HSA4101T" manufactured by NF Corporation) and phase-separated by 180° by the output transformer to give voltages, each being out of phase 90°, and the resulting voltages were applied.

Each of the two rotary ultrasonic motors had the following size.

### (Rotary elastic member with no comb teeth)

Piezoelectric vibrator: made of PZT, inner diameter: 6 mm, outer diameter: 10 mm, thickness: 0.5 mm
Elastic member: inner diameter: 4 mm, outer diameter: 10 mm, thickness: 2 mm
Rotor: made of aluminum, inner diameter: 4 mm, outer diameter: 10 mm, thickness: 5 mm
Power source: the frequency was adjusted according to each material so as to give the maximum vibration.

### (Rotary elastic member with comb teeth)

Piezoelectric vibrator: made of PZT, inner diameter: 6 mm, outer diameter: 10 mm, thickness: 0.5 mm
Elastic member: inner diameter: 4 mm, outer diameter: 10 mm, thickness: 2 mm
Form of comb teeth: 16 slits, each having a width of 0.5 mm and depth of 1 mm, were formed at equal intervals.
Rotor: made of aluminum, inner diameter: 4 mm, outer diameter: 10 mm, thickness: 5 mm
Power source: the frequency was adjusted according to each material so as to give the maximum vibration.

### Example 1

The PEEK was cut to give an elastic member having the same form as that of the elastic member 43 shown in Fig. 6.

### Comparative Example 1

The PC was cut to give an elastic member having the same form as that of the elastic member 43 shown in Fig. 6.

A linear ultrasonic motor provided with the elastic member obtained in Example 1 and that provided with the elastic member obtained in Comparative Example 1 were produced. These motors were evaluated for the maximum vibration speed, and the results are shown in Fig. 9. As apparent from the results shown in Fig. 9, when the same voltage was applied, the elastic member of Example 1 had a high maximum vibration speed compared with the elastic member of the Comparative Example 1.

### Example 2

The CF-containing PPS was cut to give an elastic member having the same form as that of the elastic member 43 shown in Fig. 6 in order that the orientation direction of the carbon fiber might be parallel to the contact surface of the piezoelectric element with the elastic member and parallel to the longitudinal direction of the elastic member.

### Example 3

The CF-containing PPS was cut to give an elastic member having the same form as that of the elastic member 13 shown in Fig. 6 in order that the orientation direction of the carbon fiber might be perpendicular to the contact surface of the piezoelectric element with elastic member.

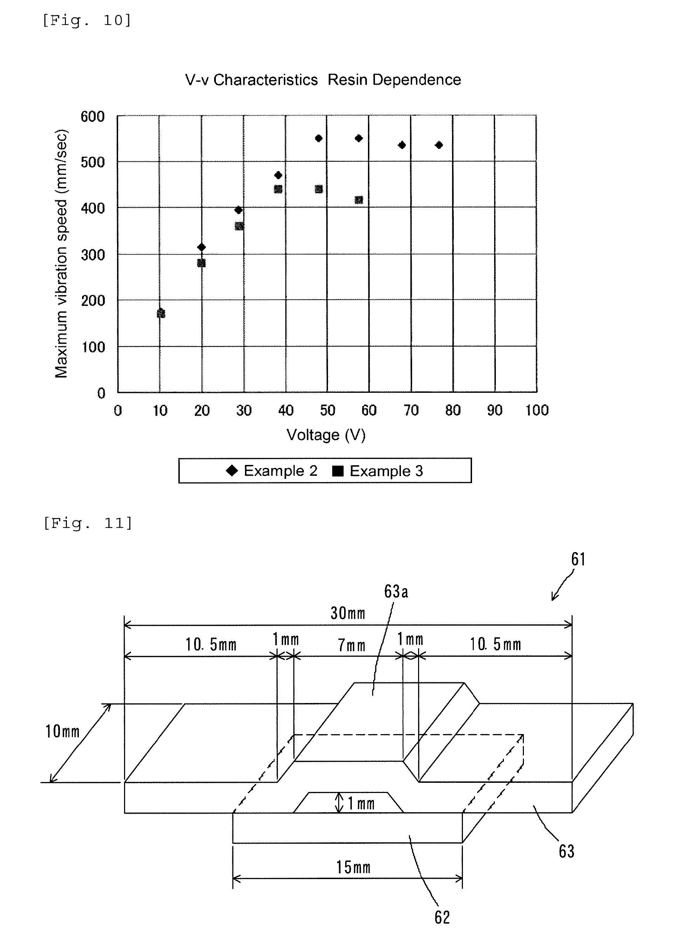

A linear ultrasonic motor provided with the elastic member obtained in Example 2 and that provided with the elastic member obtained in Example 3 were produced. These motors were evaluated for the maximum vibration speed, and the results are shown in Fig. 10. As apparent from the results shown in Fig. 10, the elastic member of Example 2 had a high maximum vibration speed at a high voltage compared with the elastic member of Example 3.

### Example 4

The CF-containing PEEK was cut to give a rotary elastic member with comb teeth as shown in Figs. 1 and 2 in order that the orientation direction of the carbon fiber might be perpendicular to the contact surface of the piezoelectric element with elastic member. A rotary ultrasonic motor provided with the resulting elastic member was produced and subjected to the rotation test. The rotary ultrasonic motor was rotated at 1.7 rpm.

### Example 5

The CF-containing PPS was cut to give a rotary elastic member with comb teeth as shown in Figs. 1 and 2 in order that the orientation direction of the carbon fiber might be perpendicular to the contact surface of the piezoelectric element with the elastic member. A rotary ultrasonic motor provided with the resulting elastic member was produced and subjected to the rotation test. The rotary ultrasonic motor was rotated at 1.8 rpm.

### Example 6

The CF-containing PEEK was cut to give a rotary elastic member in which comb-tooth port ions (or comb teeth) were not formed in Figs. 1 and 2 (i.e., a rotary elastic member with no comb teeth) in order that the orientation direction of the carbon fiber might be perpendicular to the contact surface of the piezoelectric element with the elastic member. A rotary ultrasonic motor provided with the resulting elastic member was produced and subjected to the rotation test. The rotary ultrasonic motor was rotated at 0.7 rpm.

### Example 7

The CF-containing PPS was cut to give a rotary elastic member in which comb-toothportions (or comb teeth) were not formed in Figs. 1 and 2 (i.e., a rotary elastic member with no comb teeth) in order that the orientation direction of the carbon fiber might be perpendicular to the contact surface of the piezoelectric element with the elastic member. A rotary ultrasonic motor provided with the resulting elastic member was produced and subjected to the rotation test. The rotary ultrasonic motor was rotated at 0.8 rpm.

### Example 8

The GF-containing PA was cut to give a rotary elastic member in which comb-tooth portions (or comb teeth) were not formed in Figs. 1 and 2 (i.e. , a rotary elastic member with no comb teeth) in order that the orientation direction of the glass fiber might be perpendicular to the contact surface of the piezoelectric element with the elastic member. A rotary ultrasonic motor provided with the resulting elastic member was produced and subjected to the rotation test. The rotaryultrasonic motor was rotated at 0.5 rpm.

### Comparative Example 2

The ABS was cut to give a rotary elastic member inwhichcomb-toothportions (or comb teeth) were not formed in Figs. 1 and 2 (i.e., a rotary elastic member with no comb teeth). A rotary ultrasonic motor provided with the resulting elastic member was produced and subjected to the rotation test. The rotary ultrasonic motor was not rotated.

### (B) Experiments on displacement-expanding actuator

### [Maximum vibration speed]

A displacement expansion element 63 having a thickness of 1 mm and having a form shown in Fig. 11 was produced. The resulting element and a piezoelectric element (piezoelectric vibrator) 62 that was made of PZT and had a thickness of 0.5 mm were pasted together with an adhesive ("Araldite standard" manufactured by Huntsman Japan KK) to give a cymbal piezoelectric actuator 61. For the actuator, when an AC voltage is applied to the piezoelectric element 62, the piezoelectric element expands and contracts in a longitudinal direction thereof , and the expansion and contraction (vibration) is converted into the vibration (displacement) of a raised portion 63a of the displacement expansion element 63 in a direction perpendicular to the surface of the piezoelectric element. The vibration speed in the perpendicular direction was evaluated by a laser Doppler velocimeter ("AT500-05" manufactured by Graphtec Corporation). The maximum vibration speedwas read from the amplitude of the vibration speed indicated on an oscilloscope ("TDS2014" manufactured by Tektoronix Inc.), and the relation between the maximum vibration speed and the electric current was determined.

Incidentally, the AC voltage was generated by a function generator ("WAVE FACTORY 1946" manufactured by NF Corporation) and increased by an amplifier ("HSA4101T" manufactured by NF Corporation), and the actuator was driven at the resonance frequency. The voltage applied and the frequency were adjusted so as to cause the maximum vibration according to the materials and forms of the displacement expansion element.

### Example 9

The PPS was cut to give a displacement expansion element having the same form as that of the displacement expansion element 63 shown in Fig. 11.

### Example 10

The CF-containing PPS was cut to give a displacement expansion element having the same form as that of the displacement expansion element 63 shown in Fig. 11 in order that the orientation direction of the carbon fiber might be parallel to the longitudinal direction of the displacement expansion element.

### Example 11

The PEEK was cut to give a displacement expansion element having the same form as that of the displacement expansion element 63 shown in Fig. 11.

### Example 12

The GF-containing PA was cut to give a displacement expansion element having the same form as that of the displacement expansion element 63 shown in Fig. 11 in order that the orientation direction of the glass fiber might be parallel to the longitudinal direction of the displacement expansion element.

### Comparative Example 3

The Aluminum was cut to give a displacement expansion element having the same form as that of the displacement expansion element 63 shown in Fig. 11.

### Comparative Example 4

The PC1 was cut to give a displacement expansion element having the same form as that of the displacement expansion element 63 shown in Fig. 11.

### Comparative Example 5

The GF-containing PC was cut to give a displacement expansion element having the same form as that of the displacement expansion element 63 shown in Fig. 11 in order that the orientation direction of the glass fiber might be parallel to the longitudinal direction of the displacement expansion element.

### Comparative Example 6

The ABS was cut to give a displacement expansion element having the same form as that of the displacement expansion element 63 shown in Fig. 11.

### Comparative Example 7

The PE was cut to give a displacement expansion element having the same form as that of the displacement expansion element 63 shown in Fig. 11.

Displacement-expanding piezoelectric actuators provided with the displacement expansion element s obtained in Examples and Comparative Examples were produced, and the maximum vibration speed of each actuator was measured. The maximum vibration speed at the electric current showing the highest value among the measured values was determined to be the maximum speed. The maximum vibration speed (maximum speed) was converted into a maximum vibration speed per specific gravity (a converted speed per specific gravity), which is shown in Table 1.

[Table 1]

**Table 1**

| | Material | Specific gravity | Maximum speed (mm/sec.) | Converted Speed per specific gravity (mm/sec.) |
|---|---|---|---|---|
| Example 9 | PPS | 1.34 | 1230 | 918 |
| Example 10 | PPS/CF 30% | 1.46 | 1600 | 1096 |
| Example 11 | PEEK | 1.32 | 830 | 629 |
| Example 12 | PA/GF 50% | 1.65 | 670 | 406 |
| Comparative Example 3 | Aluminum | 2.68 | 670 | 250 |
| Comparative Example 4 | PC1 | 1.2 | 20 | 17 |
| Comparative Example 5 | PC/GF 30% | 1.41 | 440 | 312 |
| Comparative Example 6 | ABS | 1.05 | 190 | 181 |
| Comparative Example 7 | PE | 0.91 | 80 | 88 |

As apparent from the results shown in Table 1, all of the displacement-expanding actuators of Examples have a high converted speed per specific gravity compared with the actuators of Comparative Examples.

### (C) Experiments on Langevin transducer

### [Piezoelectric element]

Piezoelectric layer made of PZT (manufactured by Fuji Ceramics Corporation, C-216, thickness: 4 mm)
Electrode plate made of copper (tough pitch copper foil, thickness: 100 µm)

### [Front mass and rear mass]

Molded products made of a material shown in Table 2, each having a cylindrical form with an outer diameter of 20 mm by a length of 40 mm, were used as a front mass and a rear mass.

### [Screw]

ISO M8, length: 40 mm
[Ultrasonic transducer]

A transducer having the same form as that of the Langevin transducer shown in Fig. 8 was produced. Specifically, a screw 54 was inserted into an electrode plate 512 and a piezoelectric layer 511 alternately to give a piezoelectric element 51 (electrode plate 512/piezoelectric layer 511/electrode plate 512/piezoelectric layer 511/electrode plate 512). Incidentally, the polarization of the front piezoelectric layer had the opposite direction to (the direction colliding with) that of the rear piezoelectric layer. One end of the screw 54 protruded from one side of the piezoelectric element 51 was screwed to a hole of a front mass 52, and the other end of the screw 54 protruded from the other side of the piezoelectric element 51 was screwed to a hole of a rear mass 53. Thus the piezoelectric element 51 was sandwiched in tight contact between the front mass52 and the rear mass 53 to give a Langevin transducer.

### Examples 13 to 15 and Comparative Examples 8 to 11 (measurement of vibration speed)

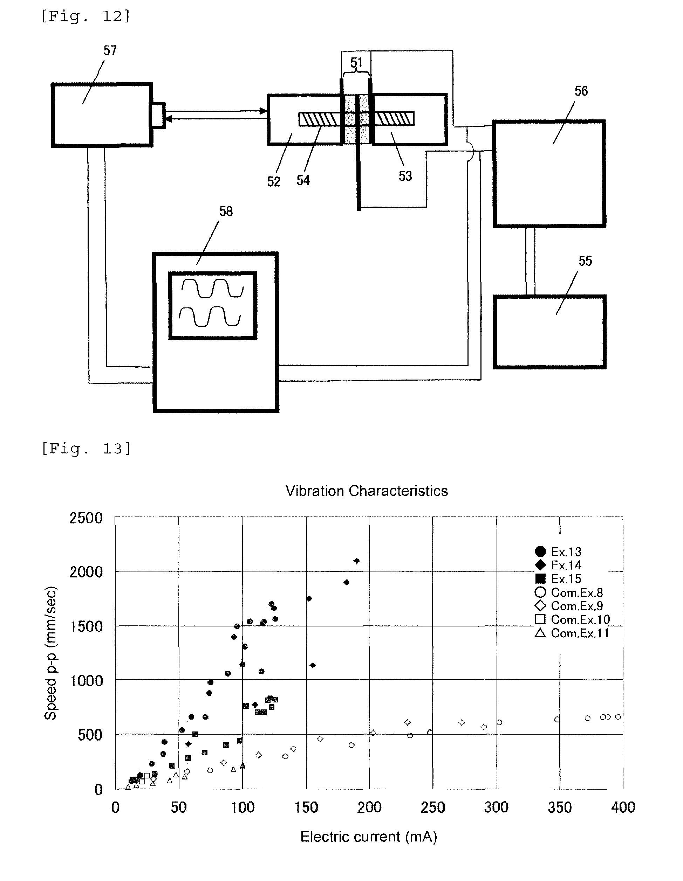

A front mass and a rear mass were made of a material shown in the following Table 2 for each of Examples and Comparative Examples. Langevin transducers provided with the front mass and the rear mass were produced. The vibration speed of each Langevin transducer was evaluated by an experimental system shown in Fig. 12. Specifically, an AC voltage generating vibrations at a resonance frequency was output from an oscillator 55, amplified by an amplifier 56, and applied between electrodes of an ultrasonic transducer to vibrate the piezoelectric element 51 in a thickness direction thereof. The resulting vibration was transmitted to the front mass 52 to emit ultrasonic waves to the outside from the transducer, and the vibration speed of the front mass 52 was evaluated by a laser Doppler velocimeter 57 ("AT500-05" manufactured by Graphtec Corporation). Incidentally, the frequency at which the electric current was maximized was observed by an oscilloscope 58 and determined to be the resonance frequency. Fig. 13 shows a dependence of the vibration speed of the surface of the front mass evaluated by the experimental system shown in Fig. 12 on the electric current applied. The maximum vibration speed is shown in Table 2.

[Table 2]

**Table 2**

| | Material for front mass and rear mass | Maximum vibration speed (mm/sec.) |
|---|---|---|
| Example 13 | PPS | 1700 |
| Example 14 | CF-containing PPS | 2100 |
| Example 15 | CF-containing PEEK | 830 |
| Comparative Example 8 | Al | 660 |
| Comparative Example 9 | PMMA | 570 |
| Comparative Example 10 | PC2 | 120 |
| Comparative Example 11 | Glass epoxy | 220 |

As apparent fromFig. 12 and Table 2, the transducers of Examples allow the surfaces of the transducers to be vibrate at a high speed even in application of a low electric current and have a high maximum vibration speed, compared with those of Comparative Examples. For example, Example 13, of which the front mass and the rear mass are made of a thermoplastic resin, has a high maximum vibration speed compared with Comparative Example 9, of which the front mass and the rear mass are made of an amorphous resin. Example 14 , of which the front mass and the rear mass contain a fiber, has a high maximum vibration speed compared with Comparative Example 11, of which the front mass and the rear mass are made of a thermosetting resin, in particular, compared with Example 13, of which the front mass and the rear mass are free from a carbon fiber.

### INDUSTRIAL APPLICABILITY

The elastic member of the present invention is useful for actuators of various electrical machinery and apparatus, measuring apparatus, and optical apparatus, in particular, for a piezoelectric actuator (for example, an ultrasonic motor, a displacement-expanding piezoelectric actuator, and a Langevin transducer).

Specifically, the elastic member of the present invention is utilizable for an ultrasonic motor (for example, a linear or rotary ultrasonic motor).

The elastic member of the present invention is also useful as a displacement expansion element of a displacement-expanding piezoelectric actuator,including a piezoelectric actuator for driving a movable body that is a non-vibrating body (in particular, an ultrasonic motor, such as a linear ultrasonic motor). For an application requiring a long-distance movement, the elastic member is also utilizable as a displacement expansion element of a piezoelectric actuator for driving the displacement expansion element itself that is a movable body. The elastic member is suitable for a cymbal piezoelectric actuator and a moonie piezoelectric actuator, particularly a cymbal piezoelectric actuator, among displacement-expanding piezoelectric actuators.

The elastic member of the present invention is preferably useful as a resonance member for a Langevin transducer suitable for a measuring apparatus (e.g., a flow meter, a bathometer, and a snow scale), a fish finder, a probe, a washing machine, and a processing machine (e. g. , a cutter and a welder).

### DESCRIPTION OF REFERENCE NUMERALS

- 1, 41: Ultrasonic motor
- 11, 21: Piezoelectric actuator
- 2, 12, 22, 42, 51: Piezoelectric element
- 3, 43: Elastic member
- 13, 23: Displacement expansion element
- 13a, 23a: Raised portion
- 14, 24: Space
- 23b: Projection
- 4, 44: Stator
- 5, 45: Movable body
- 511: Piezoelectric layer
- 512: Electrode plate
- 513: Lug portion
- 52: Front member (front mass)
- 53: Rear member (rear mass)
- 54: Axial bolt
- 55: Oscillator
- 56: Amplifier
- 57: Laser Doppler velocimeter
- 58: Oscilloscope

## Claims

1. An elastic member of an actuator which comprises an electromechanical transducer expandable and contractible in response to application of an AC voltage, the elastic member being to be fixed to the electromechanical transducer, the actuator being any one of the following actuators (1) to (3):
(1) an actuator contactable with a non-vibrating body, the actuator flexurally vibrating in response to expansion and contraction of the electromechanical transducer to drive or actuate the actuator itself or the non-vibrating body,
(2) an actuator comprising a displacement expansion mechanism for amplifying an expansion and contraction displacement of the electromechanical transducer, and
(3) an actuator comprising a pair of resonance members for holding the electromechanical transducer therebetween, at least one of the resonance members reducing an vibration frequency of expansion and contraction of the electromechanical transducer, wherein the elastic member comprises a crystalline resin.

2. An elastic member according to claim 1, wherein the electromechanical transducer is a piezoelectric element.

3. An elastic member according to claim 1 or 2, wherein the crystalline resin comprises a poly (aryl ketone) resin or a poly(phenylene sulfide) resin.

4. An elastic member according to any one of claims 1 to 3, which further comprises a filler.

5. An elastic member according to claim 4, wherein the filler comprises a fibrous filler.

6. An elastic member according to claim 5, wherein the fibrous filler is oriented parallel to an expansion and contraction direction of the electromechanical transducer.

7. An elastic member according to claim 5 or 6, wherein the fibrous filler comprises at least one member selected from the group consisting of a carbon fiber, a glass fiber, and an aramid fiber and has an average fiber diameter of 0.1 to 50 µm and an average fiber length of 1 µm to 2 mm.

8. An elastic member according to any one of claims 4 to 7, wherein the ratio of the filler is 10 to 60 parts by weight relative to 100 parts by weight of the thermoplastic resin.

9. An elastic member according to any one of claims 2 to 8, wherein the actuator is an ultrasonic motor, the elastic member has a plurality of raised portions on an opposite side with respect to a side fixed to the piezoelectric element, and the raised portions are contactable with a non-vibrating body.

10. An elastic member according to claim 9, wherein the actuator is a linear ultrasonic motor, and the plurality of raised portions has a saw-tooth form in a cross section thereof.

11. An elastic member according to claim 9, wherein the actuator is a rotary ultrasonic motor, and the elastic member has a comb-tooth portion.

12. An elastic member according to anyone of claims 2 to 8, wherein the actuator comprises a displacement expansion mechanism for amplifying an expansion and contraction displacement of the piezoelectric element, and the elastic member has a plate-like form having a raised portion to form a space between the elastic member and the piezoelectric element fixed to the elastic member.

13. An elastic member according to claim 12 , wherein the raised portion comprises a ridge being raised with flection or curvature and extending toward one direction, the ridge has a trapezoidal form in a cross section perpendicular to a ridgeline direction thereof, and the ridge has a projection on a side face thereof.

14. An elastic member according to anyone of claims 1 to 8 , which is a resonance member of a Langevin transducer.

15. A piezoelectric actuator comprising a piezoelectric element and an elastic member recited in any one of claims 2 to 14.

16. A piezoelectric actuator according to claim 15, which is a rotary ultrasonic motor that is contactable with a rotor and flexurally vibrates in response to expansion and contraction of the piezoelectric element to rotate the actuator itself or the rotor.

17. A piezoelectric actuator according to claim 15, wherein the elastic member is a displacement expansion element, the actuator is a cymbal or moonie piezoelectric actuator.

18. A piezoelectric actuator according to claim 15, which is a Langevin transducer comprising a piezoelectric element and a pair of resonance members that holds the piezoelectric element therebetween, wherein at least one of the resonance members is an elastic member recited in claim 14.

19. A piezoelectric actuator according to claim 18, wherein one of the resonance members contains a resin that is the same species as a resin contained in the other of the resonance member, and the piezoelectric element and at least one of the resonance members are pressed with a joining means to contact with each other.
